# EUROPÄISCHE PATENTSCHRIFT

(11) **EP 0 986 306 B1**
(45) Veröffentlichungstag und Bekanntmachung des Hinweises auf die Patenterteilung: **24.10.2001**
(21) Anmeldenummer: 99923402.4
(22) Anmeldetag: 01.04.1999
(51) Int. Cl.: A21C 3/06, A21C 9/06

(54) **HERSTELLUNGSVERFAHREN UND -VORRICHTUNG FÜR GEWICKELTE TEIGPRODUKTE**
PRODUCTION METHOD AND DEVICE FOR ROLLED DOUGH PRODUCTS
PROCEDE ET DISPOSITIF POUR FORMER DES PRODUITS DE BOULANGERIE ROULES

(30) Priorität: 01.04.1998 DE 19814520
(43) Veröffentlichungstag der Anmeldung: 22.03.2000
(73) Patentinhaber: A. FRITSCH GMBH & CO. KG, D-97348 Markt Einersheim (DE)
(72) Erfinder: BERNHARDT, Udo, D-97346 Iphofen (DE); TROST, Ernst, D-97348 Markt Einersheim (DE)
(74) Vertreter: Götz, Georg, Dipl.-Ing.
(86) Internationale Anmeldenummer: DE9900994
(87) Internationale Veröffentlichungsnummer: WO9949736

(56) Entgegenhaltungen:
- EP-A- 0 036 088
- EP-A- 0 551 177
- EP-A- 0 673 603
- WO-A-86/02808
- WO-A-88/00437
- GB-A- 2 075 906

## Beschreibung

Die Erfindung betrifft ein Verfahren zum maschinellen Herstellen eines gewickelten Teigprodukts aus einem Ausgangsteigstück, indem es in sich gerollt und/oder umgeschlagen wird, gemäß Oberbegriff des Anspruchs 1. Ferner betrifft die Erfindung eine zur Durchführung dieses Verfahrens geeignete Vorrichtung zum Herstellen gewickelter Teigprodukte mit einem ersten Wirk- und/oder wickelförderer, der eine Teigstückförderrichtung definiert, und einem zweiten gegenüberliegenden Wirk- und/oder Wickelförderer, der mit einer von der des ersten Wickelförderers abweichenden Geschwindigkeit betrieben wird und mit diesem einen Wirk- und/oder Wickeldurchgang begrenzt, um dazwischen ein Ausgangsteigstück einzurollen und/oder in sich einzuschlagen gemäß Oberbegriff des Anspruchs 2. Ferner betrifft die Erfindung eine Teigverarbeitungsanlage unter Verwendung dieses Verfahrens und/oder dieser Vorrichtung.

Ein Verfahren und eine Vorrichtung etwa dieser Art ist aus DE A-29 09 296 "Gebäckformmaschine" bekannt: Auf einem Band werden Gebäckstücke zu einem Wickelapparat befördert, nachdem sie zuvor einen Fühler durchlaufen haben, der ein entsprechendes Signal an eine Steuereinrichtung gegeben hat. Das in den Wickelapparat einlaufende Gebäckstück läuft unter einer Druckrolle hindurch, wodurch es an der Stirnseite nach oben gekrümmt und vom Förderband angehoben wird. Wenn es mit der vorlaufenden Stirnseite auf eine weitere Bändergruppe trifft, wird diese von dieser nach oben mitgenommen und trifft dabei auf eine dritte Bändergruppe, welche die vorlaufende Stimkante des Gebäckstücks nach unten zieht und dadurch einrollt. Allerdings bilden die genannten Bänder eine etwa dreieckförmige Wickelkammer, und die in Förderrichtung zuletzt angeordnete Bändergruppe dient einerseits dem Hochstellen der vorauseilenden Gebäckstückkante. Andererseits muß die letzte Bändergruppe, wenn der Wickelvorgang beendet ist. nach oben verschwenkt werden, um die Wickelkammer zum Freigeben des fertig gewickelten Gebäckstücks zu öffnen. Die Bewegungsabläufe des Wegklappens und Zurückklappens der letzten Bändergruppe sind sowohl unter Konstruktions- als auch Zeitgesichtspunkten aufwendig, was sich nachteilig auf den Gebäckstückdurchsatz und die Effizienz der Gebäckformmaschine auswirkt.

Es ist ferner aus EP 0 238 682 B1 und WO 95/20 322 bekannt, Teigmaterial in einer Kammer zu wickeln, das von Fördermitteln und rotierenden Walzen begrenzt ist. Nach Vollendung des Wickelvorgangs wird diese Kammer geöffnet, so daß das gewickelte Teigprodukt herausfallen und in einem Behälter weiterbefördert werden kann.

Femer ist aus dem deutschen Gebrauchsmuster Nr. 296 19 35.8 eine Wirkeinrichtung mit einem in Förderrichtung feststehenden Wirkbrett bekannt, das mit verstellbarem Abstand über der Oberfläche eines Förderbandes angeordnet ist. Zur Erleichterung und Vorbereitung des Wirkvorganges ist unmittelbar im Eingangsbereich des Förderbandes vor dem Wirkbrett eine Einschlagmatte angeordnet, die auf die vorbeipassierenden Teigstücke Druck ausübt Dadurch entsteht beim Teigstück ein vorderer, bereits eingeschlagener bzw. eingeroltter Rand. Grundsätzlich läßt sich damit zwar eine serienmäßige Wickelung von hintereinander ankommenden Teigausgangsstücken im Durchlauf erzielen; allerdings hat sich in der Praxis gezeigt, daß dieser bereits vorher durchgehend eingeschlagene Stimrand des Ausgangsteigstücks sich leicht aus diesem Zustand wieder lösen kann, bis er von der Wickeleinrichtung zuverlässig erfaßt ist. Ein weiterer Nachteil ergibt sich dann, wenn die Herstellung gefüllter Teigprodukte vorgesehen ist. Die dazu vor dem Wickeln auf der Teigstückoberfläche mittig angebrachte Füllung wird dann beim vorherigen Einschlagen leicht verdrückt bzw. der Füllung wird der Platz genommen.

Bei einem bekannten Rollholz für Waffelröllchen (DE-U-1 893 103) ist an einem runden Stab eine Metallleiste angebracht, mittels der eine fertig gebackene, noch heiße Waffel aus einem Waffeleisen entnommen und, ohne von der Hand berührt zu werden, zu einem fertigen Röllchen gerollt werden kann.

Aus FR-A-2 701 631 ist es zur Kreppherstellung bekannt, auf einem Förderband aufgelegte Ausgangsteigstücke mit Hilfe von Druckluft hochzustellen und umzuschlagen. Dazu wird eine Vielzahl feiner Luftstrahlen verwendet, die senkrecht oder schräg zur Grundebene der Teigausgangsstücke verlaufen.

Aus US-A-4 171 197 ist es zur Herstellung gewickelter Teigwaren bekannt, Ausgangsteigstücke über einen Förderbandabschnitt zu führen, welcher diesen eine nach oben offene, konkave Wölbung erteilt, wobei die vorauseilende Stirnkante nach oben gestellt ist. Sodann werden diese derart gebogenen Teigstücke einem Wickel- oder Wirkdurchgang zugeführt.

Aus DE-C-43 42 519 ist eine Vorrichtung zum Längswirken von gewickelten Teigstücken bekannt, welche von Formwalzen Gebrauch macht, die in ihrem mittigen Bereich eine konkave Wölbung aufweisen. Dadurch sollen Teigstränge erzeugt werden, die allerdings zur Bildung von Brezelformlingen spezifiziert sind.

Ein gattungsgemäßes Herstellungsverfahren für gewickelte Teigprodukte aus einem jeweiligen Ausgangsteigstück ist aus WO-A-86/02808 entnehmbar. Dort wird für eine Teig-Wickelmaschine die Anordnung eines ersten, kleineren Wickeldurchgangs und eines zweiten, größeren Wickeldurchgangs vorgeschlagen. Schon beim ersten, kleineren Wickeldurchgang kommt es zum Hochklappen des vorderen Teigrandes des Ausgangsteigstücks. Dabei wird dieses ständig in einer horizontalen Teiglage gehalten.

Dem gegenüber liegt der Erfindung die Aufgabe zugrunde, ein solches Verfahren und eine entsprechende Vorrichtung zum Erzeugen gewickelter und insbesondere gefüllter Teigprodukte so weiterzuentwickeln, daß im Herstellungsbetrieb die Zuverlässigkeit und Sicherheit sowie der Durchsatz und die Effizienz des Wickelvorgangs erhöht sind. Insbesondere soll das Anwickeln des Teigstücks in Verbindung mit den diskret bereits eingeschlagenen Randstellen besonders effektiv gefördert werden.

Zur Lösung wird das im beiliegenden Patentanspruch 1 angegebene Verfahren und die -im beiliegenden Patentanspruch 2 angegebene Vorrichtung vorgeschlagen. Vorteilhafte Ausgestaltungen ergeben sich aus den abhängigen Patentansprüchen.

Nach der erfindungsgemäßen Methode werden also gleichsam "abstehende Ohren" zweckmäßig im in Förderrichtung vorne liegenden Teigstückrandabschnitt erzeugt, die sich von dem nachfolgenden Wirk- und/oder Wickeldurchgang besonders leicht und zuverlässig erfassen lassen. Insbesondere im Zusammenhang mit einer auf der Oberfläche des Ausgangsteigstücks vorhandenen Füllmasse läßt sich so für das spätere Wickeln ein Wickelkern bzw. ein Hohlraum für die Füllmasse zwischen den beiden "abstehenden Ohren" reservieren. Damit läßt sich eine Zentrierung der Füllung in der Mitte des Teigausgangsstückes erreichen. Nach der Erfindung werden die diskreten Stellen, beispielsweise die äußeren Enden auf der Stirnseite eines Teigausgangsstückes, eher vollständig geschlossen nach innen geschlagen als der dazwischen liegende Mittelabschnitt.

Besonders geeignet ist die erfindungsgemäße Methode für dreieckig zugeschnittene Ausgangsteigstücke, die so gedreht sind, daß sie - auf einem Förderband liegend - mit einer Dreiecksbasisseite der Förderrichtung zugewandt sind. Es hat sich bewährt, daß wenigstens beim Anheben der diskreten Randstellen des Teigstücks der daran angrenzende Teigstückbereich auf eine Unterlage gedrückt wird. Damit läßt sich erreichen, daß die "abstehenden Ohren" in einer möglichst präzisen Lage auf den Teigstückrand erzeugt werden.

Erfindungsgemäß wird während des Anhebens der Einzelrandstellen der entsprechende Randabschnitt und/oder das gesamte Ausgangsteigstück von einer Ausgangsebene aus in eine Schräglage versetzt. In dieser Stellung lassen sich die "abstehenden Ohren" von einer nachfolgenden Wickeleinrichtung besonders gut erfassen und der Wickelvorgang leicht initiieren. Dieser Effekt läßt sich noch dadurch fördern, daß ein Ausgangsstück verwendet wird, dessen Oberfläche mit wenigstens einer Rille oder einen linienartigen oder mehreren linienartig aneinandergereihten Vertiefungen versehen ist, welch parallel zum anzuhebenden Rand verlaufen. Die Rillen bilden gleichsam eine Schwenklinie oder Knickkante, um welche sich die diskreten Einzelrandstellen oder später auch er gesamte Rand hochklappen läßt.

Erfindungsgemäß wird die Kombination mit einem oder mehreren im Abstand voneinander angeordneten Hochstellmitteln vorgeschlagen, die jeweils zum Eingriff mit einer in Förderrichtung vome liegenden, diskreten Randstelle des Ausgangsteigstücks angeordnet und ausgebildet sind. Dabei ist es zweckmäßig, daß die Hochstellmittel dem Funktionsbereich des Wirk- oder Wickelvorgangs vorgelagert sind. Letzterer kann so ständig mit offenem Ausgang betrieben werden, was den Teigstückdurchsatz und die Produktionsgeschwindigkeit erhöht.

Nach einer vorteilhaften Ausbildung entspricht der quer zur Förderrichtung verlaufende Abstand zweier Hochstellmittel der stirnseitigen Breite des Ausgangsteigstücks. Ist dieses mit mehreren Ecken und Seiten dazwischen gestaltet, dann läßt sich die Wickelvorrichtung besonders kompatibel zur Durchführung des angesprochenen Wickelverfahrens einsetzen: Als anzuhebende Einzelrandstellen werden beide Enden bzw. Ecken einer Seite des Ausgangsteigstücks von den Hochstellmitteln ergriffen. Danach wird der zwischen den Seitenecken befindliche Seitenabschnitt als kontinuierlicher Randabschnitt im Wirk- und/oder Wickeldurchgang umgeschlagen und eingerollt. Um die Wickelvorrichtung für unterschiedliche Teigstückgrößen einsetzen zu können, ist es zweckmäßig, die Hochstellmittel so einstellbar auszubilden, daß ihr Abstand voneinander an die jeweilige Größe des Teigprodukts anpaßbar ist. Die Hochstellmittel sind zweckmäßig als Greif- und/oder Reibkörper realisiert, mit denen ein form- bzw. kraftflüssiger Eingriff mit der diskreten Teigrandstelle herbeiführbar ist. Altemativ oder zusätzlich können die Hochstellmittel als rampenartig ansteigender oder abfallender Schrägabschnitt beim ersten oder zweiten Wickelförderer, im Eingangsbereich des Wirk- oder Wickeldurchgangs angeordnet, realisiert sein. Mit besonderem Vorteil ist der Schrägabschnitt in seiner Winkellage verstellbar gelagert und mit einem sensorisch und/oder von einem Zeitgeber gesteuerten Verstellantrieb gekoppelt. Damit läßt sich auch die vorteilhafte Verfahrensvariante realisieren, zunächst die Hochstellung der diskreten Einzelrandstücke und nachfolgend des gesamten Randes mit dem ansteigenden Schrägabschnitt durchzuführen, und diesen dann flach zu stellen, um den vorbereiteten Wirk- oder Wickelvorgang zu vervollständigen.

Nach einer anderen vorteilhaften Konkretisierung ist das Hochstellmittel als Teigrandeinschlagrad ausgeführt, das entgegen der Förderrichtung - vorzugsweise mit einem höheren Geschwindigkeitsbetrag als der erste und/oder zweite Wirk- oder Wickelförderer - angetrieben ist. Auf seinem Umfang ist es zum Eingriff mit der oder den Randstellen des Ausgangsteigstücks mit einem Reib-oder Greifbelag versehen. Der Vorteil besteht in der Erzielung einer kompakten Bauweise. Diese ergibt sich insbesondere dann, wenn der erste und zweite Wirk-und/oder Wickelförderer jeweils mit einer Mehrzahl nebeneinander im Abstand angeordneter Teigförderriemen ausgeführt ist, die endlos um wenigstens zwei Antriebs- und/oder Spannwalzen geführt sind. Dann erschließt sich die weitere vorteilhafte Ausführung, nach der die Hochstell- und/oder etwaige zusätzliche Führungsmittel zwischen die Riemen tauchend angeordnet sind, so daß sie dabei in Berührung mit den zu wickelnden bzw. wirkenden Ausgangsteigstück kommen. Die Raum- und Platzeinsparung ergibt sich dadurch, daß die Hochstellmittel im Bereich des Wirk- und/oder Wickelförderers angeordnet werden können.

Die Ausbildung der Fördermittel bei dem oberen oder unteren Wickelförderer durch Förderriemen, insbesondere Gummischnüre, erbringt den Vorteil einer verbesserten Hygiene. In die Zwischenräume zwischen den Förderriemen läßt sich Flüssigkeit hineinspritzen, wodurch sich die gesamte Wickeleinrichtung leicht reinigen läßt. Damit können Teigreste nach Produktionsende einfach entfernt werden.

Erfindungsgemäß wird bei der Wickelvorrichtung vorgeschlagen, daß in einem Eingangsbereich des Wirk- und/oder Wickeldurchgangs sich der Abstand der Wirk- und/oder Wickelförderer nach innen zunehmend, vorzugsweise keilartig, bis auf einen am Ende des Eingangsbereichs konstanten Endwert vermindert, In diesem verbleibenden Teil des Wirkkanals wird dann das Ausgangsteigstück zum gewickelten Teigprodukt fertiggewickelt. Durch den sich keilartig verjüngenden Eingangsbereich des Wickelkanals wird das Anwickeln des Teigstücks in Verbindung mit den diskret bereits eingeschlagenen Randstellen besonders effektiv gefördert.

Im Falle gefüllter Teigprodukte soll die urspringlich vorgenommene Positionierung der Füllung auf dem Ausgangsteigstück beim Wickelvorgang möglichst wenig beeintröchtigt werden, und beim fertigen Produkt eine gleichmäßige und symmetrische Gestalt erzielbar sein. Dazu wird die vorteilhafte Ausbildung vorgeschlagen, daß eine oder beide Seiten, mit denen die Wirk- und/oder Wickelförderer den Wirk- und/oder Wickeldurchgang begrenzen, mit einer in Förderrichtung länglichen, mittig verlaufenden Vertiefung auf ihrer jeweiligen Oberfläche versehen sind. Dieser Erfindungsgedanke ist vor allem zur Herstellung gewickelter Teigprodukte mit innerer Speisefüllung vorteilhaft. Die Vertiefung auf der Ober- und/oder Unterseite des Wickelkanals bzw. -durchgangs bildet gleichsam einen Tunnel für den die Füllung aufweisenden Bereich des Ausgangsteigstücks. Damit gelingt ein Wickelvorgang, bei dem die Füllung mit minimaler Deformation eingewickelt werden kann. In Verbindung mit der obigen, ersten Erfindungsaltemative - auf diskrete Randstellen des Ausgangsteigstücks wirkende Hochstelimittel - läßt sich dafür sorgen, daß die Füllung so wenig als möglich verdrückt wird. Die diskret angehobenen Randstellen können soweit auseinander liegen, daß die Füllung nicht davon berührt wird. Vielmehr wird für sie Platz geschaffen, und beim Wickeln läßt sich ein Füllungskem bilden. In dieser Hinsicht besteht eine vorteilhafte Ausbildung der Erfindung darin, daß der Abstand der Hochstellmittel voneinander der Breite der Vertiefung im Eingangsbereich des Wirk- und/oder Wickeldurchgangs und/oder der Breite einer Teigfüllung entspricht.

Zweckmäßig ist vorgesehen, daß der erste und zweite Wirk-und/oder Wickelförderer relativ zueinander derart beweglich gelagert sind, daß eine manuelle Anpassung und/oder selbsttätige Einstellung des Wirk- und/oder Wickeldurchgangs an die Dicke oder den Durchmesser des zu wickelnden Ausgangsteigstücks gegeben ist. Damit wird der Vorteil einer erhöhten Verfügbarkeit der Wickelvorrichtung für den Produktionsbetrieb erzielt: Schlecht oder fehlerhaft gewickelte Teigstücke können während des laufenden Produktionsbetriebs schnell entfernt werden, indem der erste und zweite Wickelförderer voneinander entfernt, beispielsweise aufgeklappt werden. Noch wichtiger ist folgende Funktion der Aufklappbarkeit: Ist ein Teigstück schlecht oder unregelmäßig eingeschlagen, dann würde an sich der Durchmesser des Teigstücks nicht mehr in den Wickeldurchgang passen. Um dies auszugleichen, kann sich die Wickeleinrichtung durch selbsttätiges Auseinanderklappen der beiden Wickelförderer voneinander an einen fehlerhaften, beispielsweise zu großen Durchmesser des Teigstücks selbsttätig anpassen, ohne daß manuell eingegriffen zu werden braucht Das schlecht oder fehlerhaft gewickelte Teigstück wird dann einfach weiter aus dem Wickeldurchgang heraustransportiert, ohne daß der laufende Produktionsbetrieb unterbrochen wird. Ohne Aufklappbarkeit käme es bei Einschlagfehlem zu einem Teigstau. Zweckmäßig ist es, das Aufklappen dadurch zu realisieren, daß der erste und/oder der zweite Wirk- und/oder Wickelförderer an ihren in Förderrichtung hinteren Enden entweder aneinander gelenkt oder an ein Vorrichtungschassis angelenkt sind.

Zur vorteilhaften Weiterbildung wird die Anordnung einer Teigproduktführungseinrichtung am Ausgang des Wirk- und/oder Wickeldurchgangs vorgeschlagen, welche Führungseinrichtung mit derart ausgerichteten Fördermitteln realisiert ist, daß den den Durchgang verlassenden Teigprodukten eine mit der Förderebene und/oder -richtung weitgehend übereinstimmende Bewegung und/oder eine Bewegungsbeschränkung erteilt wird, so daß insbesondere ein Abheben der Teigprodukte von ihrer Trag-und/oder Förderebene verhindert ist. Dadurch läßt sich die Betriebssicherheit erhöhen, indem zum einen ein Aufwickeln des bereits eingerollten Teigprodukts und zum anderen ein unkontrolliertes Herausschleudern verhindert ist.

Zur Erzielung einer einfachen Konstruktion ist nach einer Ausbildung dieses Erfindungsgedankens vorgesehen, daß die Führungseinrichtung mit dem Endbereich des zweiten Wirk- und/oder Wickelförderers zumindest teilweise funktionell und baulich verbunden, integriert und/oder einstückig ausgeführt ist. Dies kann sich dadurch konkretisieren, daß der zweite Förderer einen gegenüber den ersten Förderer im Endbereich verlängerten Überstand besitzt.

Mit der Erfindung ist auch die Integration der genannten Wickelvorrichtung und/oder des genannten Wickelverfahrens in ein System oder eine Anlage zur Teigverarbeitung denkbar, bei der Ausgangsteigstücke in einer Bearbeitungsstation ausgeschnitten und geeignet gedreht auf die Wickelvorrichtung zulaufen. Zweckmäßig ist dazwischen eine Füllstation eingeschaltet, in der die Ausgangsteigstücke mit einem Füllpunkt mittig versehen werden.

Im Zusammenhang mit der oben genannten Umklapprille bzw. linienartigen Vertiefung auf der Oberfläche des Ausgangsteigstücks ergibt sich für das eingangs genannte Verfahren eine weitere Verfahrensausbildung dahingehend, daß ein Ausgangsteigstück verwendet wird, dessen Oberfläche mit wenigstens einer Rille oder einer linienartigen oder mehreren linienartig aneinandergereihten Vertiefungen versehen ist, welche parallel zum anzuhebenden Rand verlaufen, und daß femer ein Wirk- oder Wickeldurchgang verwendet wird, dessen Eingangsbereich einen Schrägabschnitt mit rampenartig ansteigenden Winkellage gegenüber der Grundebene des Ausgangsteigstücks aufweist Dagegen wird aufgrund des Fördervorgangs das Ausgangsteigstück mit seinem anzuhebenden Vorderrand in Anschlag gebracht, wodurch es um die Rille oder Vertiefung leicht hochgestellt und umgeschlagen werden kann. Mit dieser Erfindungsausbildung wird der Vorteil denkbar daß aufgrund der Rille oder linienartigen Vertiefung aufwendige Hochstellmittel zusätzlich zu dem Schrägabschnitt möglicherweise weggelassen werden können. Eine besonders vorteilhafte Weiterbildung dieses Erfindungsverfahrens ergibt sich mit der bereits oben angesprochenen Möglichkeit, die Winkellage des Schrägabschnitts von einer ansteigenden Stellung zum Hochstellen des Teigstückvorderrandes in eine flache Stellung auf gleicher Höhe wie die Grundebene des Ausgangsteigstücks zu verlegen, um den vorbereiteten Wirk- oder Wickelvorgang zu vervollständigen.

Weitere Einzelheiten, Merkmale, Vorteile und Wirkungen auf der Basis der Erfindung ergeben sich aus den Unteransprüchen sowie aus der nachfolgenden Beschreibung bevorzugter Ausführungsformen der Erfindung und den Zeichnungen. Diese zeigen in:
- Fig. 1: eine schematische Darstellung der grundlegenden, erfindungsgemäßen Verfahrensschritte,
- Fig. 2: in schematischer, perspektivischer Ansicht eine Wickelvorrichtung nach der Erfindung,
- Fig. 3: eine Seitenansicht auf die Vorrichtung der Fig. 2,
- Fig. 4: eine vergrößerte Darstellung der Einzelheit IV in Fig. 3,
- Fig. 5: eine Ansicht in Richtung V in Fig. 4,
- Fig. 5A: eine Draufsicht auf ein erfindungsgemäß verwendetes Ausgangsteigstück in seiner Relativlage zu Einschlagrädem,
- Fig. 5B: das Ausgangsteigstück in der umgeschlagenen Phase
- Fig. 6: eine perspektivische Ansicht auf eine Befüllstation für die Erfindung
- Fig. 7-11: perspektivische Ansichten auf die weitere erfindungsgemäße Wickelvorrichtung,
- Fig. 12: eine schematische Darstellung auf eine weitere Wickelvorrichtung ohne unteren Wickel- oder Wirkförderer,
- Fig. 13: eine perspektivische Darstellung des oberen und unteren Wirk- oder Wickelförderers der Vorrichtung gemäß Fig. 12 im aufgeklappten Zustand,
- Fig. 14: Querleisten für die Förderbänder der Wickel- oder Wirkförderer gemäß Fig. 12 und 13,
- Fig. 15: eine schematische Seitenansicht auf die Wickelvorrichtung gemäß Fig. 12 und 13,
- Fig. 16: eine vergrößerte Darstellung der Einzelheit XVI in Fig. 15, und
- Fig. 17: eine Ansicht in Richtung XVII in Fig. 16.
- Fig. 18: eine Figur 1 entsprechende schematische Darstellung grundlegender Verfahrensschritte nach einer Erfindungsalternative.

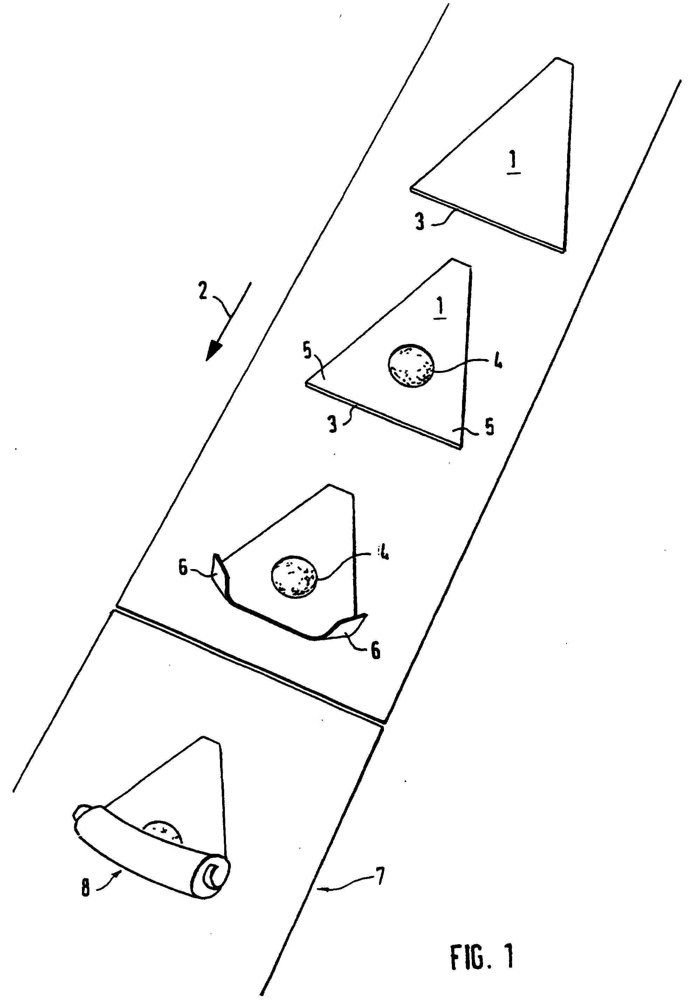

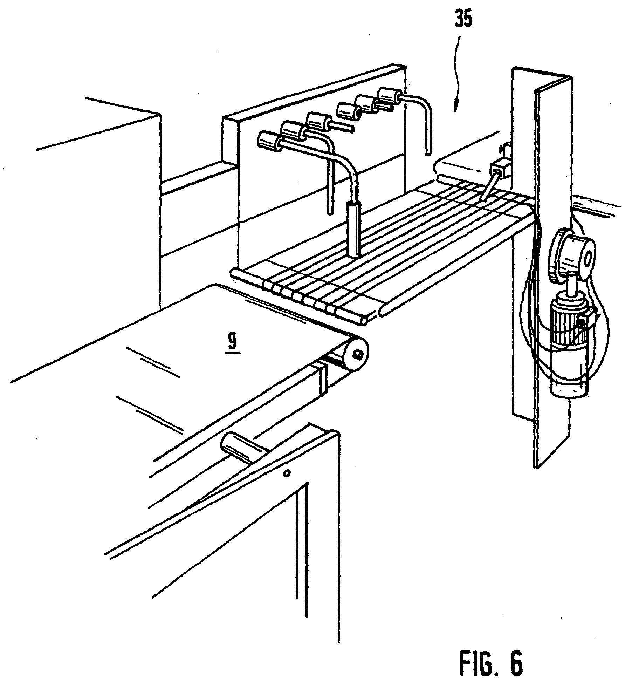

Gemäß Fig. 1 werden in einer (nicht dargestellten) Schneidstation aus einem kontinuierlichen Teigband Ausgangsteigstücke 1 in dreieckiger oder gemäß gezeichnetem Beispiel trapezförmiger Grundform ausgeschnitten und so gedreht, daß von den beiden parallelen Seiten der Teigstücktrapezform in Förderrichtung 2 die längere Seite als Stirnseite 3 nach vorne zu liegen kommt. In einer der Schneidstation nachfolgenden Befüllungsstation (vgl. z.B. Fig. 6) wird auf der Oberfläche des Ausgangsteigstücks 1 eine Speisefüllung 4 etwa mittig aufgesetzt. Im weiteren Verfahrensschritt wird die Stirnseite 3 an ihren beiden äußeren Bereichen, nämlich ihren einzelnen Ecken 5 mittels (hier nicht dargestellter) Hochstellmittel etwa rechtwinklig nach oben angehoben. Diese nach oben geknickten Ecken bilden gleichsam Eselsohren 6. In einer Richtung quer zur Förderrichtung gesehen befindet sich die Speisefüllung 4 etwa in der Mitte zwischen dem ersten und dem zweiten Eselsohr 6. Im weiteren Verfahrensschritt, nämlich dem Wickelschritt 7, kann nun das Ausgangsteigstück 1 an den Eselsohren 6 leicht ergriffen werden. Indem von diesen beiden diskreten Stellen bei der Einleitung des Wickelvorgangs ausgegangen wird, wird nachfolgend die gesamte Stirnseite 3 des Ausgangsteigstücks angehoben, wobei die Füllmasse 4 zwischen den hochgestellten Eckbereichen 6 noch unberührt bleibt. Erst im weiteren Wickelvorgang wird Teigfläche auch um die Füllmasse 4 geschlagen, wobei sich dann das fertige Teigprodukt 8 ergibt.

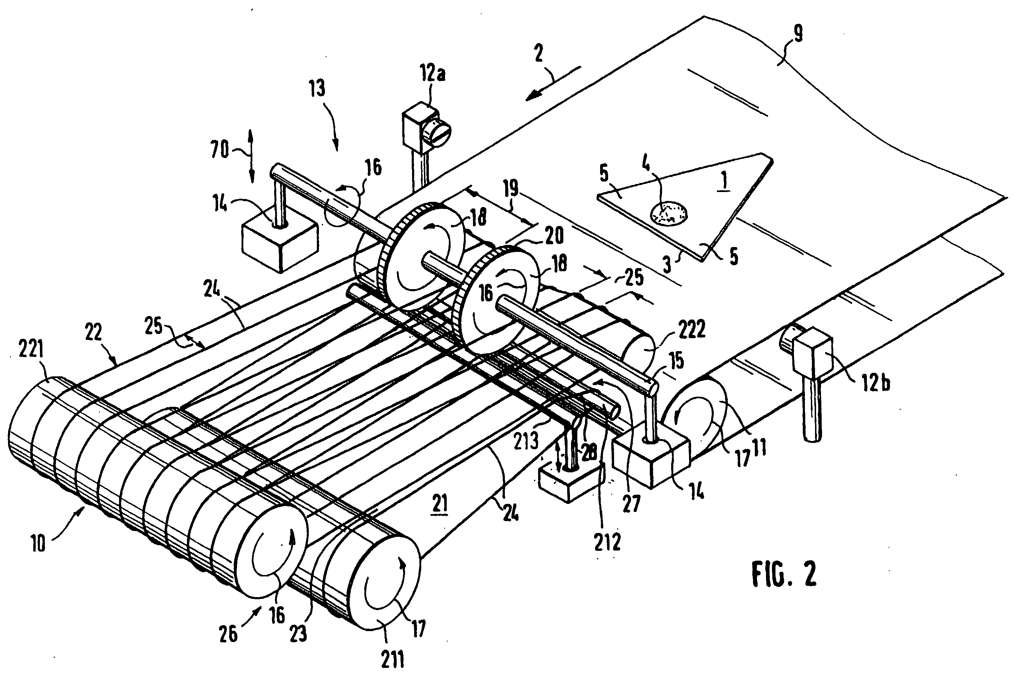

Gemäß Fig. 2 besteht eine zur Durchführung des Verfahrens geeignete Wickelvorrichtung aus einem Zuführband 9 und einer Wickeleinrichtung 10. Das Zuführband 9 wird von einer Antriebswalze 11 in Förderrichtung 2 bewegt, so daß das Ausgangsteigstück 1 mit seiner Stirnseite 3 vorneweg sich der Wickeleinrichtung 10 annähert. Beiderseits des Zuführförderbandes 9 ist eine Lichtschranke 12a, 12b angeordnet, die quer zur Förderrichtung 2 die Oberfläche des Zuführförderbands 9 auf das Vorhandensein von Ausgangsteigstücken 1 abtastet. Sie ist über eine (nicht gezeichnete) Steuerung mit einer Hebeeinrichtung 13 gekoppelt, die ein oder mehrere Linearantriebe 14 und eine quer zur Förderrichtung laufende Antriebswelle 15 umfaßt. Über einen (nicht gezeichneten) Drehantrieb wird die Antriebswelle 15 in eine Drehung 16 entgegen dem Uhrzeigersinn versetzt. Diese ist mit der Drehung 17 der Antriebswalze 11 gleichsinnig. Von der Querantriebswelle 15 werden zwei Einschlagräder 18 angetrieben, die voneinander einen axialen Abstand 19 aufweisen. Diese sind auf ihrem Umfang mit einer Greifriffelung 20 versehen, die dem Hochstellen der Ecken 5 des Ausgangsteigstücks 1 dienen.

Gemäß Fig. 2 besteht die Wickeleinrichtung 10 aus einem unteren Wickelförderer 21 und einem oberen Wickelförderer 22. Beide begrenzen zwischen sich einen Wickeldurchgang 23 für die Ausgangsteigstücke 1 und sind jeweils aus in Förderrichtung 2 endlos um Antriebs- und Spannwalzen 211, 212, 213, 221, 222 laufende Förderriemen 24 gebildet. Diese besitzen bezüglich den parallelen Achsen der genannten Walzen voneinander gleichmäßige, achsparallele Abstände 25. Im Ausgangsbereich 26 der Wickeleinrichtung 10 umlaufen die Förderriemen 24 beim oberen und unteren Wickelförderer 21, 22 jeweils Antriebswalzen 211, 221 größeren Durchmessers (Antriebsmittel nicht gezeichnet). Im Eingangsbereich 27 des Wickeldurchgangs 23 sind die Förderriemen 24 um Spannwalzen 212, 213, 222 kleineren Durchmessers geführt. Der untere Wickelförderer 21 besitzt dabei zwei Spannwalzen 212, 213, die parallel und quer zur Förderrichtung 2 verlaufen sowie vertikal gegeneinander versetzt liegen. Zwischen der unteren Spannwalze 212, die im Eingangsbereich 27 den Anfang der Wickeleinrichtung 21 bildet, und der oberen Spannwalze 213 ist eine gegenüber der Horizontalen schräge Anlauframpe 28 gebildet, indem die dortigen Förderriemenabschnitte von den zugeordneten Spannwalzen 212, 213 schräg nach oben verlaufend umgelenkt werden. In Förderrichtung nach der oberen Spannwalze 213 des unteren Wickelförderers 21 gehen die Förderriemen 24 in eine Förderebene über, die zu der des oberen, gegenüberliegenden Wickelförderers 22 weitgehend parallel verläuft.

Gemäß Fig. 2 ist die Antriebswelle 15 etwa oberhalb des Eingangsbereichs 27 über die Förderriemen 24 des oberen Wickelförderers (quer zur Förderrichtung 2) verlaufend angeordnet, und zwar mit einem solchen Abstand zur Oberseite des oberen Wickelförderers 22, daß die Einschlagräder 18 den oberen Wickelförderer 22 zwischen den Abständen 25 der Förderriemen 24 voneinander durchsetzen. Dabei kommt die umfangsseitige Greifriffelung 20 in Berührung mit dem vorderen Stimrand 3 des Ausgangsteigstücks 1 bzw. den dortigen Eckpunkten 5.

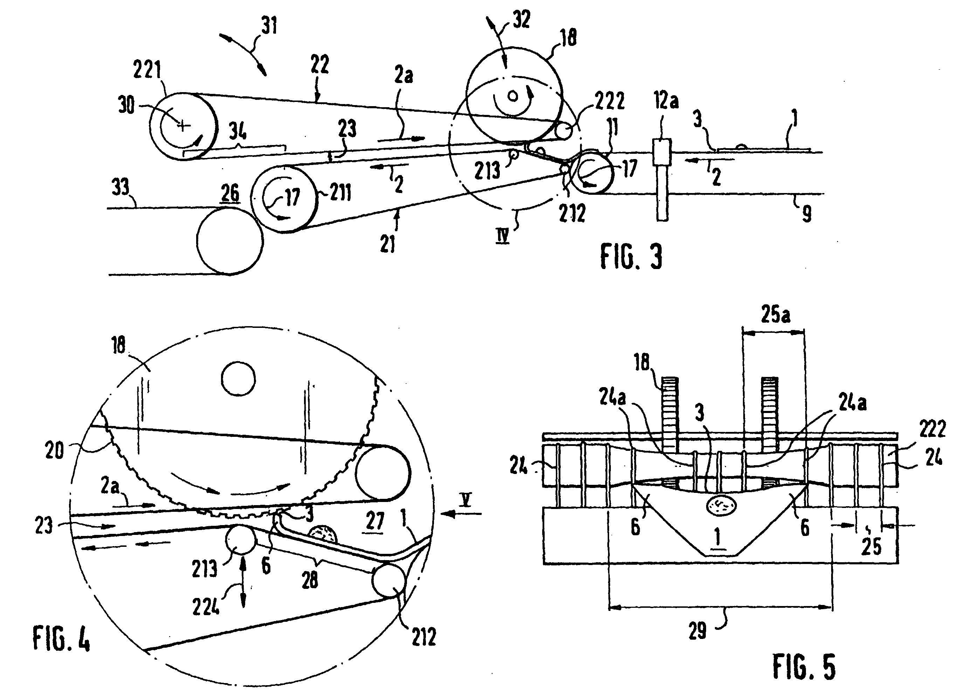

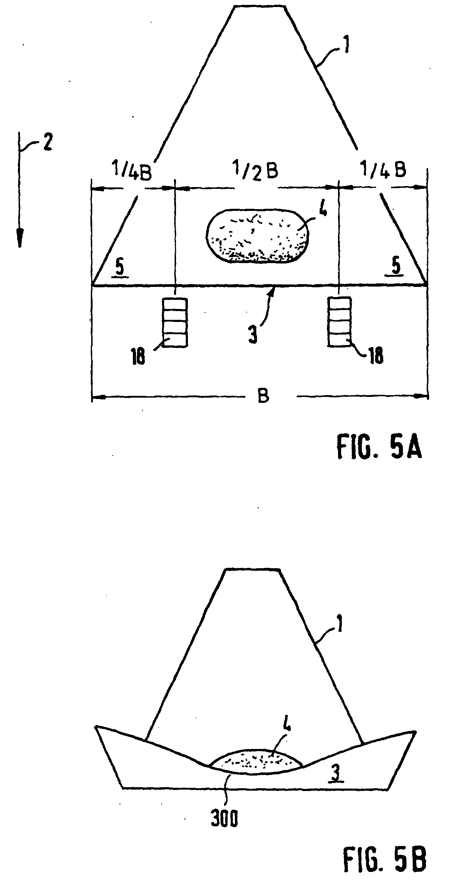

Gemäß Fig. 5 kann nach einer besonderen Ausbildung zwischen den jeweiligen Förderriemen 24a, zwischen denen die Einschlagräder 18 zum Ausgangsteigstück 1 durchtauchend angeordnet sind, ein größerer Abstand 25a als zwischen den sonstigen Förderriemen 24 mit dem Abstand 25 voneinander vorgesehen sein. Ferner ist gemäß Fig. 5 die eingangsseitige Spannwalze 222 des oberen Wickelförderers mit einem mittigen Verjüngungsabschnitt 29 gestaltet. Unmittelbar dahinter bzw. in Förderrichtung deckungsgleich liegend drehen sich die Einschlagräder 18. Zusätzlich können (nicht gezeichnet) auch die beiden eingangsseitigen Spannwalzen 212, 213 des unteren Wickelförderers 21 mit gleichartigen Verjüngungen versehen sein.

Nachfolgend sei die Funktionsweise der erfindungsgemäßen Wickelvorrichtung anhand der Fig. 1 - 5 näher erläutert.

Gemäß Fig. 3 sind der untere Wickelförderer 21 in Förderrichtung 2 mit Drehung entgegen dem Uhrzeigersinn und der obere Wickelförderer 22 mit gegenläufiger Förderrichtung 2a angetrieben. Entsprechend dreht sich die Antriebswalze 221 des oberen Wickelförderers 22 mit der Drehrichtung 16 entgegen dem Uhrzeigersinn. Gleichfalls entgegen dem Uhrzeigersinn werden die Anschlagräder 18 gedreht und zwar mit der höchsten Winkelgeschwindigkeit. Demgegenüber beträgt die Winkelgeschwindigkeit der Antriebswalze 211 des unteren Wickelförderers 21 etwa die Hälfte. Die Winkelgeschwindigkeit der Antriebswalze 228 des oberen Wickelförderers 22 nimmt etwa die Hälfte der Winkelgeschwindigkeit der unteren Antriebswalze 211 ein. Die Fördergeschwindigkeit des Zuführbandes 9 ist etwas langsamer eingestellt als die des unteren Wickelförderers 21. Der obere Wickelförderer ist um eine Schwenkachse 30, die deckungsgleich mit der Drehachse der oberen Antriebswalze 221 verläuft, angelenkt, so daß dem oberen Wickelförderer 22 hin-und hergehende Schwenkbewegungen 31 entweder manuell oder während des Wickelvorgangs durch Druck der im Wickeldurchgang 23 befindlichen Teigstücke erteilt werden können. Femer lassen sich die Einschlagräder 18 in eine Hoch-oder Tiefbewegung 32 versetzen, indem die in Fig. 2 gezeigte Hebeeinrichtung 13 von der genannten Steuerung entsprechend angesteuert wird. Die Ansteuerung zum Hochheben der Einschlagräder 18 geht auf die Erfassung eines Ausgangsteigstücks 1 durch die Lichtschranke 12a, 12b und auf ein davon angestoßenes, erstes Zeitglied (nicht gezeichnet) zurück. Letzteres erzeugt für die Hochhebansteuerung der Hebeeinrichtung 13 aufgrund eines Lichtschrankensignals eine Zeitverzögerung, die dem Zeitraum der Detektion eines Ausgangsteigstücks 1 durch die Lichtschranke 12a, 12b bis zum in Fig. 4 dargestellten Eingriff der Stimseite 3 mit der Greifriffelung 20 auf dem Umfang des Einschlagrades 18 entspricht. Nach Ablauf dieser Zeitverzögerung wird das Einschlagrad 18 aus dem Bereich des Abstands 25 bzw. 25a zwischen den Förderriemen 24 des oberen Wickelförderers 22 herausbewegt, und das Ausgangsteigstück 1 kann mit seinen durch den Eingriff mit dem Einschlagrad 18 erzeugten Eselsohren 6 in den Wickeldurchgang 23 ungehindert gelangen. Mit dem Hochheben des Einschlagrades 18 wird ein zweites Zeitglied der genannten Steuerung angestoßen. Dessen Zeitverzögerung deckt den Zeitraum ab, der für das Hochheben des Einschlagrades 18 und für das darunter Vorbeibewegen des stirnseitig angewinkelten Ausgangsteigstücks 1 in den Wickeldurchgang 23 benötigt wird. Nach Ablauf dieser Zeitverzögerung wird die Hebeeinrichtung zum Senken des Einschlagrades 18 angesteuert, bis es zwischen die benachbarten Förderriemen 24a des oberen Wickelförderers 22 zum Eingriff mit dem nächsten Ausgangsteigstück 1 in Stellung gebracht ist.

Gemäß Fig. 3 und 4 gelangt das Ausgangsteigstück vom Zuführförderer 9 auf die Anlauframpe 28, die mittels der. Förderriemenabschnitte zwischen der unteren Spannwalze 212 und der oberen Spannwalze 213 des unteren Wickelförderers 21 gebildet ist. Der Beginn der Anlauframpe 28 liegt unterhalb der Förderebene des Zuführbandes 9. Dadurch wird das Ausgangsteigstück 1 mit seiner Stirnseite 3 schräg gegenüber einer der zweiten oberen Spannwalze 213 des unteren Wickelförderers 21 gegenüberliegenden Tangente an den Umfang des Einschlagrades 18 heranbewegt und herangedrückt. Damit läßt sich die Stirnseite 3 an der vom Einschlagrad 18 erfaßten Stelle mit den Rechteckzacken der Greifriffelung 20 besonders effektiv erfassen und nach oben schlagen. Wird der oberen Spannwalze 213 eine vertikale Auf- und Abwärtsbewegung 224 erteilt, kann die Anlauframpe 28 in ihrer Winkellage verandert und je nach Anforderung und Zweckmäßigkeit erhöht oder erniedrigt werden. Vorzugsweise wird die Anlauframpe 28 dann für den weiteren Wirk- oder Wickelprozess erniedrigt, wenn Eselsohren 6 zu dessen Vorbereitung gebildet sind.

Wie auch in Fig. 5 angedeutet, werden durch die Einschlagräder 18 lediglich die äußeren Eckbereiche der Stirnseite 3 zu Eselsohren 6 hochgeschlagen, während der dazwischenliegende Abschnitt der Stirnseite 3 weiter unten verbleibt. Verläßt das Ausgangsteigstück 1 mit hochgestellten Eselsohren 6 den Eingangsbereich 27 zwischen der schrägen Anlauframpe 28 und der oberen Spannwalze 222 des oberen Wickelförderers 22, werden die Eselsohren 6 durch die gegenläufige Unterseite (Gegenförderrichtung 2a) erfaßt und weiter umgeschlagen. Damit geht auch ein Umschlagen und Einrollen des mittleren Abschnitts der Stimseite 3 zwischen den Eckbereichen bzw. Eselsohren 6 einher. Dies kann erfindungsgemäß aufgrund der vorher mittels der Einschlagräder 18 erzeugten, beidseitigen Eselsohren 6 mit hoher Betriebszuverlässigkeit erfolgen; entsprechendes gilt für die Erzeugung der Eselsohren 6 aufgrund der Schrägstellung der Anlauframpe 28 gegenüber der Tangente im Eingriffsbereich am Einschlagrad 18. In der Anfangsphase beim Erzeugen der Eselsohren 6 und beim Verlassen des Eingangsbereichs 27 in den Wickeldurchgang 23 bleibt die Speisefüllung 4 noch weitgehend unberührt. Mit zunehmenden Einlaufen in den Wickeldurchgang 23 wird der mittlere Abschnitt der Stirnseite 3 zwischen den Eselsohren 6 mit hochgehoben, und es erfolgt ein zentrischer Einlauf in den durch die Verjüngung 29 der oberen Spannwalze 222 gebildeten Tunnel bzw. länglichen Vertiefung innerhalb des Wickeldurchgangs 23. Durch die vorher eingerollten Eckbereiche bzw. Eselsohren 6 und die Erzeugung einer tunnelartigen Vertiefung mittels der Verjüngung 29 im Wickelkanal 23 wird dafür gesorgt, daß die Speisefüllung 4 schonend eingewickelt wird. Sie bleibt in der Mitte und wird nicht nach außen gedrückt. Damit wird ein unbefriedigendes Produktaussehen vermieden, wie es sich beim Ausdrücken der Füllung aus dem Teigstück ergeben würde. Es liegt im Rahmen der Erfindung, daß auch die beiden Spannwalzen 212, 213 des unteren Wickelförderers 21 mit einer entsprechenden Vertiefung versehen sind.

Gemäß Fig. 3 schließt sich an den unteren Wickelförderer 21 ein beispielsweise um etwa einen halben Durchmesser der unteren Antriebswalze 211 nach unten versetztes Wegführförderband 33 an. Dieses begrenzt zusammen mit dem an der oberen Antriebswalze 221 angrenzenden hinteren Endabschnitt des oberen Wickelförderers 22 den bereits genannten Ausgangsbereich der Wickeleinrichtung 10. In Förderrichtung 2 besitzt der obere Wickelförderer 22 gegenüber dem unteren Wickelförderer 21 einen Überstand 34 bzw. steht entsprechend in den Ausgangsbereich 26 vor. Dadurch läßt sich vermeiden, daß bei hohen Produktions- und Fördergeschwindigkeiten fertig gewickelte Teigprodukte unkontrolliert aus dem Ausgangsbereich 26 hinausgeschleudert werden.

Gemäß Figur 5A besteht eine zweckmäßige Anordnung für Einschlagräder 18 darin, daß deren Abstand voneinander etwa die Hälfte der Breite B der Stirnseite 3 des Ausgangsteigstücks 1 beträgt. Vorteilhaft ist eine symmetrische Anordnung derart, daß dann der jeweilige Wirkungsbereich der Einschlagräder 18 von den nächstliegenden Enden ein Viertel der Gesamtlänge B der Stirnseite 3 des Ausgangsteigstücks 1 beträgt. Die Einschlagräder 18 können dann noch in die Eckbereiche 5 des Ausgangsteigstücks 1 mit einwirken. Die Speisefüllung 4 ist ersichtlich in Förderrichtung 2 gesehen im vorderen Bereich nahe der Stirnseite 3 des Ausgangsteigstücks 1 und zwischen den Einschlagrädern 18 angeordnet. Dadurch ergibt sich beim Hochschlagen der Stirnseite 3 gemäß Figur 5B beim Kantenverlauf der Stirnseite 3 eine Wölbung oder Biegung 300 um das Volumen der Speisefüllung 4 herum.

Gemäß Fig. 6 kann dem Zuführförderband 9 eine automatische Befüllstation 35 vorgeschaltet sein.

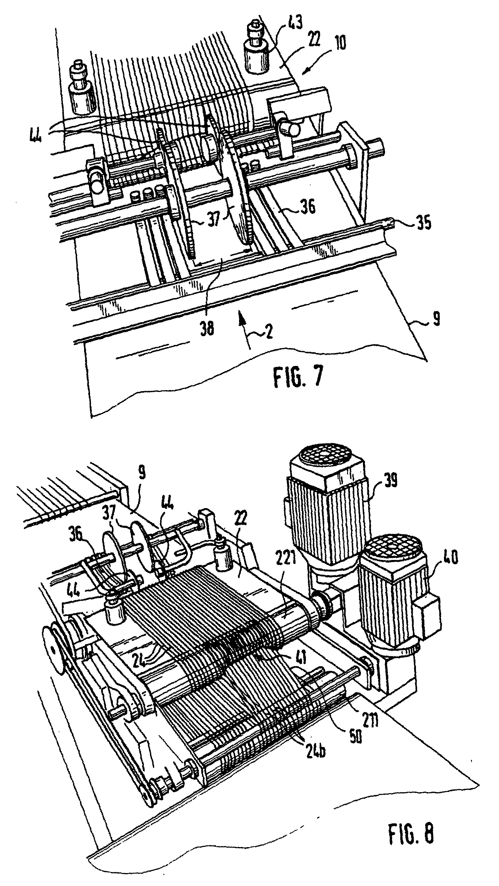

Ein weiteres Ausführungsbeispiel für eine erfindungsgemäße Wickelvorrichtung ist in den Fig. 7 - 11 gezeigt.

Gemäß Fig. 7 bewegt sich das Zuführband unterhalb einer Anlenkachse 35 vorbei. An dieser sind zwei Gruppen von jeweils drei Hebellaschen 36 verschwenkbar angelenkt. Diese dienen als Hochstellmittel zur Erzeugung der obigen Eselsohren 6. Um dabei das Ausgangsteigstück sicher auf der Oberfläche des Förderbandes 9 zu halten, sind zwischen den beiden Gruppen von Hebellaschen 36 Druck- und Führungsräder 37 frei drehbar oder mit einem Drehantrieb verbunden angeordnet. Der Abstand 38 der beiden Gruppen von Hebellaschen 36 entspricht etwa der Länge der Stirnseite eines Ausgangsteigstücks. Die Hebellaschen sind an ihrer dem Förderband 9 gegenüberliegenden Seite mit einem Reibbelag und/oder einer Eingriffsriffelung versehen.

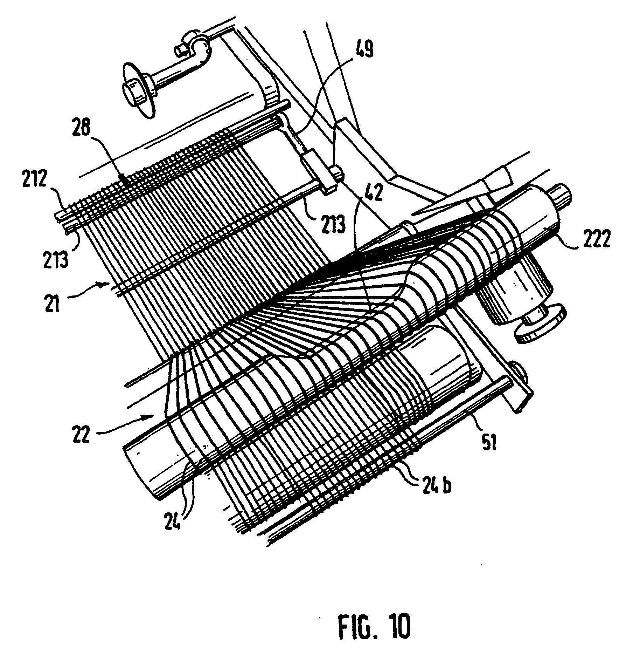

Gemäß Fig. 8 ist sowohl die obere Antriebswalze 221 des oberen Wickelförderers 22 als auch die untere Antriebswalze 211 des unteren Wickelförderers 21 jeweils mit einem eigenen Drehantrieb 39 bzw. 40 versehen. Die obere Antriebswalze 221 ist mit einer mittigen Verjüngung 41 gestaltet, die mit einem mittigen achsparallelen Ausnehmungsabschnitt 42 (vgl. Fig. 10) der vorderen Spannwalze 222 des oberen Wickelförderers 22 zusammenwirkt. Der Ausnehmungsabschnitt 42 liegt im zusammengeklappten Zustand der Wickeleinrichtung 10 der Oberseite des unteren Wickelförderers 21 gegenüber. Der obere Wickelförderer 22 ist im Eingangsbereich 27 der Wickeleinrichtung 10 mit Gewichten 43 auf der Oberseite versehen (vgl. Fig. 7), womit ein gewisser Druck auf in den Wickeldurchgang 23 gelangende Teigstücke einstellbar ist. Insbesondere läßt sich einstellen, ab welcher Teigstärke bzw. bei welchem Druck innerhalb des Wickeldurchgangs es zu einem selbsttätigen Hochschwenken des oberen Wickelförderers 22 zum Ausgleich von unregelmäßigen Teigwickelvorgängen kommen kann. Sind die Druck- und Führungsräder mit einem Drehantrieb gekoppelt, ist die Nachordnung weiterer, frei laufender Führungsräder 44 kleineren Durchmessers zweckmäßig. Deren quer zur Förderrichtung verlaufender Abstand ist etwa so bemessen, daß sie an den von den Hebellaschen 36 mit deren gerippter oder gezackter Eingriffsfläche gebildeten Eselsohren 6 innen vorbeilaufen.

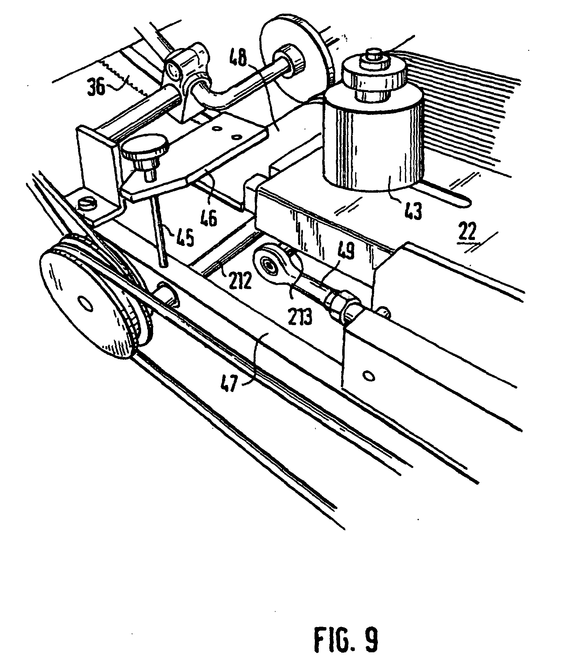

Gemäß Fig. 9 läßt sich die Spaltgröße des Eingangsbereichs 27 in den Wickeldurchgang 23 mittels Rändelschrauben 45 einstellen, indem sie in Innengewindebohrungen von Verbindungslaschen 46 ein- und ausschraubbar sind. Das untere Schraubenende ist gegen das Vorrichtungschassis 47 abgestützt. Die Verbindungslasche 46 ist mit einem Rahmen 48 des oberen Wickelförderers 22 (mit Gewicht 43) fest verbunden. Durch Ein- und Ausschrauben der Rändelschraube 45 in der Innengewindebohrung der Verbindungslasche 46 läßt sich der obere Wickelförderer 22 in seiner Höhe gegenüber dem unteren Wickelförderer verschwenken und verstellen. Als Schwenkachse kann beispielsweise die hintere Antriebswalze 221 (vgl. Fig. 8) verwendet werden. Darum läßt sich der obere Wickelförderer 22 dann auch manuell hochschwenken, wie in Fig. 10 gezeigt.

Gemäß Fig. 9 und 10 läßt sich mittels einer Exzentereinrichtung 49 die Schrägstellung der Anlauframpe 28 einstellen, indem die innere Spannwalze 213 der beiden eingangsseitigen Spannwalzen 212, 213 in ihrer Höhe mittels der Hebeleinrichtung 49 nach oben oder nach unten verstellt wird. Der bereits angesprochene Ausnehmungsabschnitt 42 in einem Umfangssektor der eingangsseitigen, oberen Spannwalze 22 wirkt im zusammengeklappten Zustand mit der Verjüngung 41 der mittig angeordneten Antriebswalze 221 zur Bildung eines Tunnels oder einer Vertiefung zusammen, die sich durch den Wirkdurchgang 23 in der Förderoberfläche des oberen Wirkförderers 22 erstreckt. Zusammen mit dem das Anwickeln des Ausgangsteigstücks unterstützenden Keil aufgrund der mittels der Rändelschrauben 45 einstellbaren Anlauframpe 28 ergibt sich eine zentrierende Wirkung auf das mit Füllmasse 4 in den Wirkdurchgang gelangende Ausgangsteigstück sowohl in horizontaler als auch in vertikaler Richtung jeweils quer zur Förderrichtung 2.

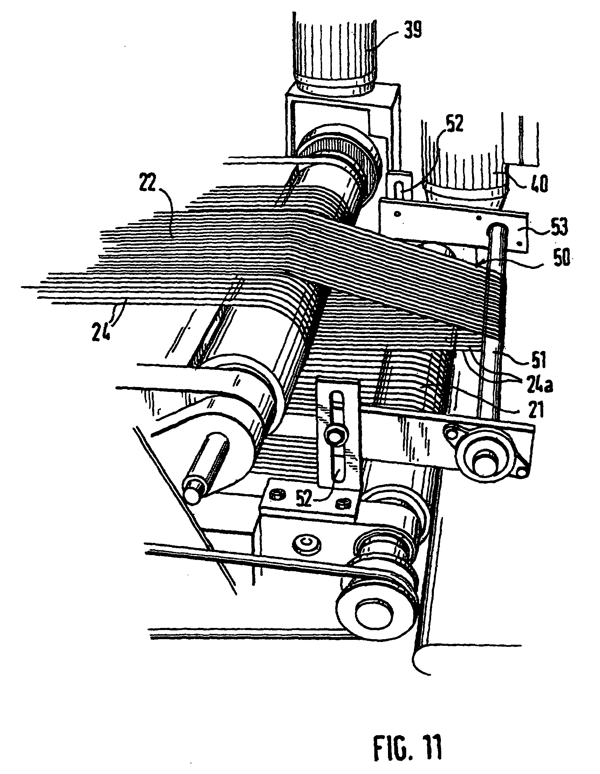

Während gemäß Fig. 3 die Teigproduktführungseinrichtung am Ausgang des Wickeldurchgangs 23 mit dem überstehenden Ende 34 des zweiten Wickelförderers 22 baulich integriert ausgeführt ist, ist nach Fig. 8 und 11 die Führungseinrichtung mit einem zusätzlichen Ausgangsförderer 50 verwirklicht, der sich unmittelbar an den zweiten Wirk- und/oder Wickelförderer 22 in Schrägrichtung nach unten anschließt. Wie die Wickelförderer 21, 22, so ist auch der Ausgangsförderer 50 mit Förderriemen 24 realisiert. Sowohl die des oberen Wickelförderers 2 als auch des Ausgangsförderers 50 umfassen die obere Antriebswalze 221 "Lücke auf Lücke": Zwischen den Förderriemen 24, die die obere Antriebswalze 221 sowie die obere Spannwalze 222 (vgl. Fig. 10) des oberen Wickelförderers 22 umfassen, verlaufen die Förderriemen 24b des Ausgangsförderers 50, welche die obere Antriebswalze 221 des oberen Wickelförderers 22 und eine Spannrolle 51 gemeinsam und endlos umfassen, die quer zur Förderrichtung verlaufend im Abstand von der oberen Antriebswalze 221 und gegenüber dieser nach unten vertikal versetzt angeordnet ist. Hierdurch kommt der schräg nach unten gerichtete Verlauf der Unterseite des Ausgangsförderers 50 zustande. Diese Schräglage läßt sich durch Höhenverstellung der Spannrolle 51 einstellen, welche über die beidseitigen Langlöcher 52 am Vorrichtungschassis in Verbindung mit darin verschraubten Tragplatten 53 für die Spannrolle 51 ermöglicht ist.

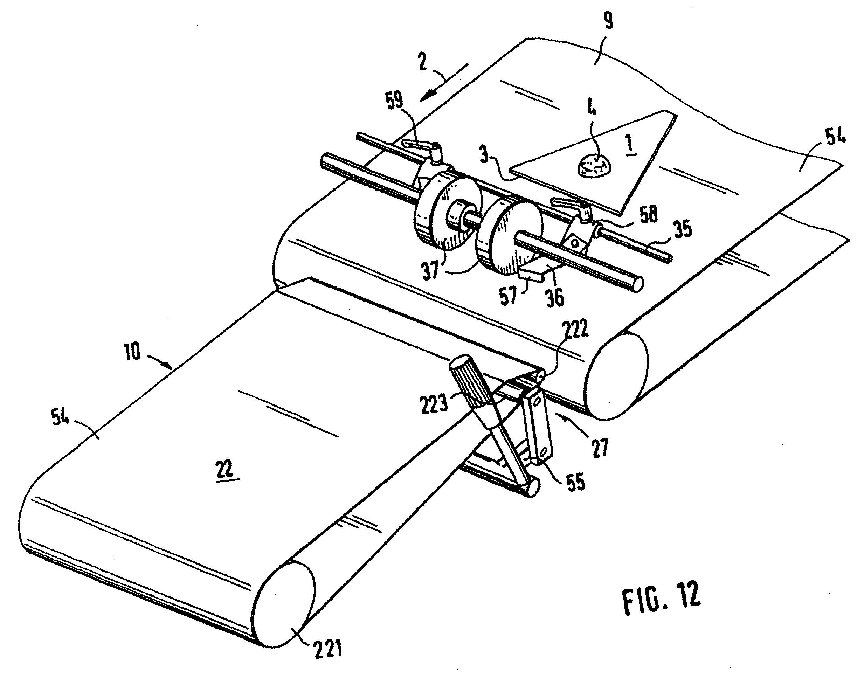

In Fig. 12 - 17 ist eine weitere Ausführungsform der erfindungsgemäßen Wickelvorrichtung gezeigt.

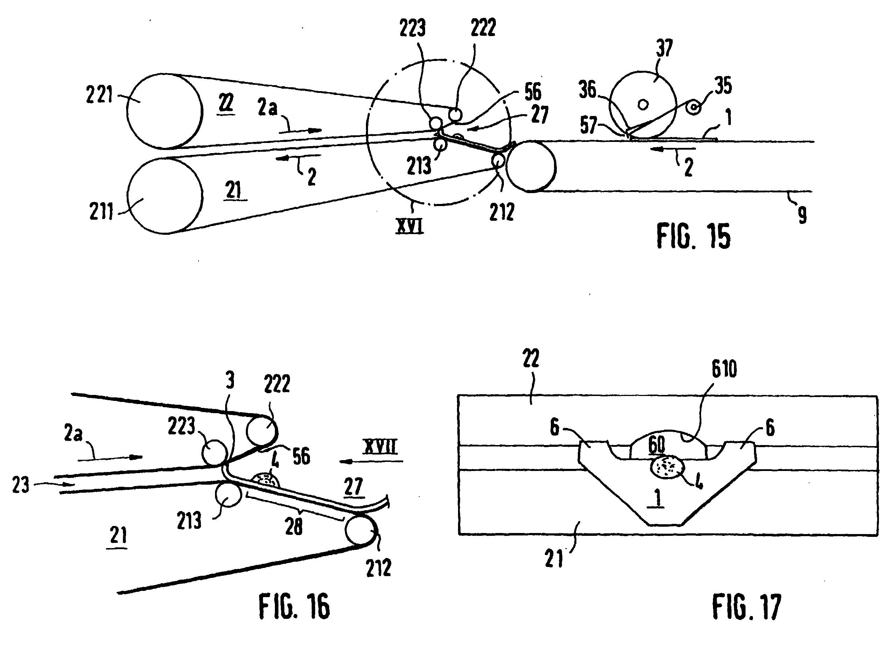

Gemäß Fig. 12, in der zur zeichnerischen Vereinfachung der untere Wickelförderer weggelassen ist, sind sowohl der Zuführförderer 9 als auch die Wickeleinrichtung 10 mit oberen Wickelförderer 22 und unteren Wickelförderer jeweils mit Förderbänder 54 beispielsweise aus Filzmaterial realisiert. Die Höhe bzw. Größe des Eingangsbereichs 27 in die Wickeleinrichtung 10 läßt sich mit Hilfe eines exzentrischen Hebelgestänges 55 einstellen. Durch dieses wird eine quer zur Förderrichtung 2 verlaufende, im Eingangsbereich 27 angeordnete zweite Spannwalze 223 des zweiten, oberen Wickelförderers 22 in ihrer Höhe gegenüber der ersten eingangsseitigen Spannwalze 222 verstellt. Der dadurch verstellbar entstehende Schrägabschnitt 56 vom oberen Ende des Eingangsbereichs 27 schräg zu dessen inneren Ende ist in Fig. 15 mit Bezugsziffer 56 gekennzeichnet. Ähnlich wie nach Fig. 7 sind auch nach Fig. 12 Druck- und Führungsräder 37 auf dem Zuführförderband 9 in Förderrichtung 2 abrollbar. An deren äußeren Stirnseiten liegt jeweils eine Hebellasche 36, die um die quer zur Förderrichtung 2 verlaufende Anlenkachse 35 verschwenkbar ist. Das freie Ende der Hebellasche 36 ist mit einem zur Oberfläche des Zuführförderers 9 vorspringenden Haken 57 ausgebildet. Der Abstand der Hebellaschen 36 als Hochstellglieder kann durch Verschiebung ihrer Anlenkbüchsen 58 längs der Anlenkachse 35 erfolgen. Dies dient der Anpassung an die Länge der Stimseite 3 des Ausgangsteigstücks 1. Der Abstand läßt sich dann mittels Feststellhebel 59 der Anlenkbüchsen 58 arretieren.

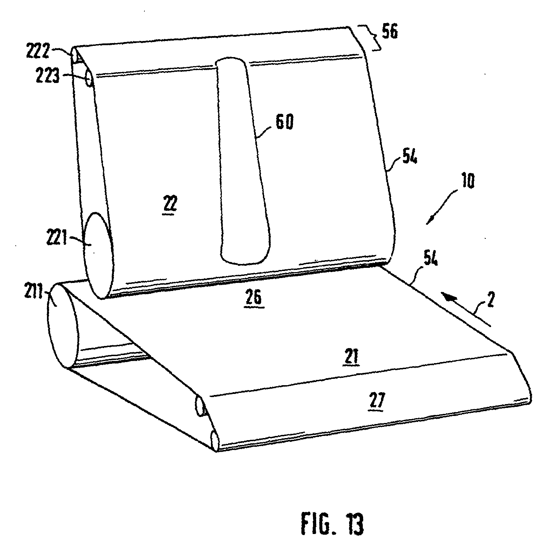

Gemäß Fig. 13 befindet sich die Wickeleinrichtung 10 der erfindungsgemäßen Wickelvorrichtung im aufgeklappten Zustand, um etwaigen Teig entfernen und/oder Wartungsarbeiten durchführen zu können. Von den beiden Wickelförderern 21, 22 jeweils mit Förderband 54 ist der obere Wickelförderer 22 nach oben geklappt, so daß dessen Unterseite sichtbar wird, in die eine tunnel-oder muldenartige Vertiefung 60 ausgebildet ist. Sie erstreckt sich parallel zur Förderrichtung 2 etwa längs der mittleren Längsachse des Wickelkanals zwischen oberer und unterer Wickeleinrichtung 21, 22. Vom Eingangsbereich 27 ausgehend nimmt ihre Breite mit zunehmender Nähe zum Ausgangsbereich 26 zu. Dies entspricht dem Wickelvorgang, bei dem das Ausgangsteigstück in seiner Umgestaltung bis zum gewickelten Teigprodukt zunehmend an Durchmesser vor allem im mittleren Bereich gewinnt, und sich die Füllmasse dabei etwas längs der Roll- bzw. Wickelachse innerhalb des umgebenden Teigs verteilt.

Eine Vertiefung gleicher Funktion resultiert auch aus den Verjüngungsabschnitten 29 gemäß Fig. 5, 41 gemäß Fig. 8 sowie aus dem Ausnehmungsabschnitt 42 gemäß Fig. 10 auf der mit voneinander beabstandeten Förderriemen 24 gebildeten Unterseite des oberen Wickelförderers 22. Eine zusätzliche Vertiefung kann auf der Oberseite des unteren Wickelförderers 21 deckungsgleich mit der oberen Vertiefung 60 ausgebildet sein.

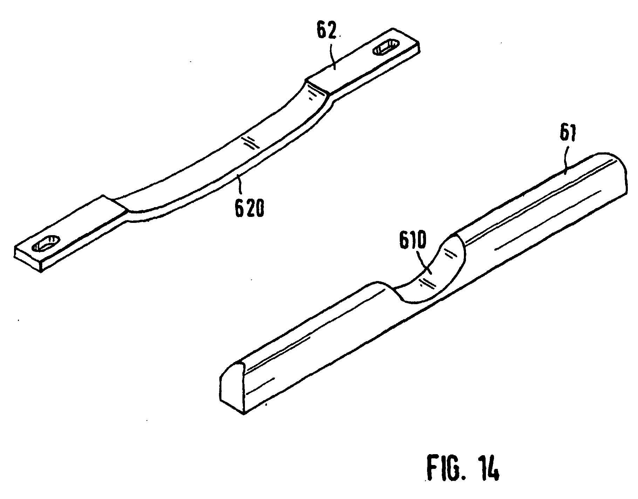

Gemäß Fig. 14 läßt sich bei dem oberen und/oder unteren Wickelförderer 22 bzw. 21 die Vertiefung 60 mit zunehmender Verbreiterung vom Anfang zum Ende des Wickeldurchgangs mit einer vorderen Querleiste 61 und einer hinteren Querleiste 62 realisieren. Diese werden parallel zu den Förderwalzen 221, 222, 223 verlaufend angeordnet (nicht gezeichnet), und das Förderband 54 wird darauf gespannt. Dabei entsteht die Vertiefung 60 bei der ersten Querleiste 51, dem Eingangsbereich 27 zugeordnet, aufgrund der mittigen, rundlich gekrümmt verlaufenden Ausnehmung 610, und bei der zweiten Querleiste 62, dem Ausgangsbereich 26 zugeordnet, aufgrund des die beiden geraden Leistenenden 63 verbindenden Biegungsabschnitts 620. Indem sich der Biegungsabschnitt 620 über eine größere Leistenlänge als die Ausnehmung 610 erstreckt, kommt es zu einer Verbreiterung der Vertiefung 60 in Förderrichtung 2.

Die Funktionsweise der Wickelvorrichtung gemäß Fig. 12 - 14 wird anhand der Fig. 15 - 17 näher erläutert:

Vom Zuführförderband angelieferte Ausgangsteigstücke 1 werden an den stimseitigen Ecken zu Eselsohren 6 aufgrund des Hakens 57 an der Hebellasche 36 umgebildet. Sodann gelangen die Ausgangsteigstücke 1 vom Zuführförderband 1 in den Eingangsbereich 27 der Wickeleinrichtung 10 und zwar zunächst auf die Anlauframpe 28 des unteren Wickelförderers 21. Von dort werden sie mit den Eselsohren vorneweg nach oben zum Schrägabschnitt 56 des zweiten Wickelförderers 22 geliefert, wobei die Eselsohren 6 mit ihren Vorderkanten auf den Schrägabschnitt 56 stoßen. Aufgrund der entgegen der Förderrichtung 2 verlaufenden Förderbewegung 2a des oberen Wickelförderers 22 werden die Eselsohren 6 noch weiter umgeknickt, wobei der verbliebene Mittelabschnitt der Stirnseite 3 für das weitere Einrollen mitgenommen wird. Aufgrund der mittigen Ausnehmung 610 in der ersten Querleiste 61 und der sich daraus ergebenden Vertiefung 60 in der Oberseite des Wirkkanals 23 verbleibt ausreichend Raum, damit die Füllmasse nicht außerhalb des Ausgangsteigstücks 1 gequetscht wird. Im übrigen gelten die Erläuterungen zu den Fig. 3-5 analog, ausgenommen die nach der vorderen, oberen Spannwalze 222 angeordneten Einschlagräder 18.

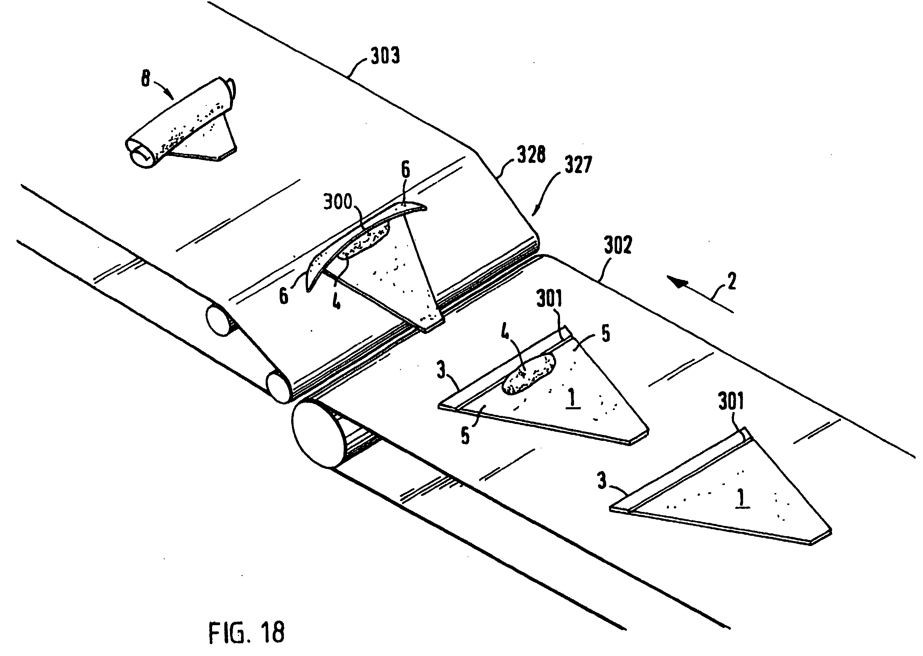

Gemäß Figur 18 besteht eine erfindungsgemäße Verfahrensvariante darin, Ausgangsteigstücke 1 zu verwenden, die im Bereich der vorderen Stimseite 3 mit einer parallelen Umschlagrille 301 versehen sind. Daran angrenzend werden Speisefüllungen 4 aufgebracht, bevor das Ausgangsteigstück vom ersten Förderband 302 zum zweiten Förderband 303 gelangt. Dieses besitzt in seinem Eingangsbereich 327 eine Anlauframpe 328 ähnlich der oben anhand der Figuren 2 und 4 erläuterten. Stößt nun das heranbewegte Ausgangsteigstück 1 mit seiner Stirnseite 3 an diese Anlauframpe 328 heran, kommt es zu einem Hoch- und Umklappen der Stirnseite 3 um die Umschlagrille 301, wobei die Speisefüllung 4 mit der oben angesprochenen Biegung 300 teilweise abgedeckt wird. Aufgrund dieser Vorbereitung in Verbindung mit einem dem zweiten Förderband 303 gegenüberliegenden, oberen Förderband (nicht gezeichnet) und einem dadurch gebildeten Wickel- oder Wirkdurchgang kann das fertig gewickelte Teigprodukt 8 dann erzeugt werden.

### Bezugszeichenliste

- 1: Ausgangsteigstücke
- 2: Förderrichtung
- 3: Stimseite
- 300: Biegung
- 301: Umschlagrille
- 302: erstes Förderband
- 303: zweites Förderband
- 4: Speisefüllung
- 5: Ecke
- 6: Eselsohr
- 7: Wickelschritt
- 8: Teigprodukt
- 9: Zuführband
- 10: Wickeleinrichtung
- 11: Antriebswalze
- 12a, 12b: Lichtschranke
- 13: Hebeeinrichtung
- 14: Linearantrieb
- 15: Antriebswelle
- 16: Drehung
- 17: Drehung
- 18: Einschlagrad
- 19: Abstand
- 21: unterer Wickelförderer
- 211: Antriebswalze
- 212: Spannwalze unten
- 213: Spannwalze oben
- 22: oberer Wickelförderer
- 221: Antriebswalze
- 222: Spannwalze
- 223: Spannwalze
- 23: Wickeldurchgang
- 24, 24a: Förderriemen
- 224: Auf- und Abwärtsbewegung
- 25: Abstand
- 26: Ausgangsbereich
- 27: Eingangsbereich
- 28: Anlauframpe
- 29: mittiger
Verjüngungsabschnitt
- 30: Schwenkachse
- 31: Schwenkbewegung
- 32: Hoch-Tiefbewegung
- 327: Eingangsbereich
- 328: Anlauframpe
- 33: Wegführförderband
- 34: Überstand
- 35: Anlenkachse
- 36: Hebellasche
- 37: Druck- und Führungsräder
- 38: Abstand
- 39: Drehantrieb
- 40: Drehantrieb
- 41: mittige Verjüngung
- 42: Ausnehmungsabschnitt
- 43: Gewicht
- 44: Führungsräder
- 45: Rändelschraube
- 46: Verbindungslaschen
- 47: Chassis
- 48: Rahmen
- 49: Hebeleinrichtung
- 50: Ausgangsförderer
- 51: Spannrolle
- 52: Langlöcher
- 53: Tragplatte
- 54: Förderband
- 55: exzentrisches Hebelgestänge
- 56: Schrägabschnitt
- 57: Haken
- 58: Anlenkbüchse
- 59: Feststellhebel
- 60: Vertiefung
- 61: vordere Querleiste
- 62: hintere Querleiste
- 620: Biegungsabschnitt
- 70: Heben, Senken

## Patentansprüche

1. Verfahren zum maschinellen Herstellen eines gewickelten Teigprodukts aus einem Ausgangsteigstück (1), indem es in sich gerollt und/oder umgeschlagen wird, wobei das Ausgangsteigstück (1) in einer ersten Phase an einer oder mehreren diskreten beziehungsweise vereinzelt beabstandeten Stellen (5) seines Randes angehoben wird, in einer nachfolgenden Phase jeweils ein von einer Einzelrandstelle (5) ausgehender, kontinuierlicher Randabschnitt (3) beim Anheben der Einzelrandstelle(n) (5) mitgenommen wird, und in einer weiter nachfolgenden Phase von dem bereits angehobenen Randabschnitt (3) ausgehend das Teigstück eingerollt und/oder nach innen geschlagen wird, **dadurch gekennzeichnet, daß** während des Anhebens der Einzelrandstellen (5) der diese aufweisende Randabschnitt (3) oder das gesamte Ausgangsteigstück (1) von einer Ausgangsebene aus in eine Schräglage versetzt wird.

2. Vorrichtung zum Herstellen gewickelter Teigprodukte, zur Durchführung des Verfahrens nach Anspruch 1, mit einem ersten Wirk- und/oder Wickelförderer (21), der das zu wickelnde Ausgangsteigstück (1) trägt und eine Teigstück-Förderrichtung (2) definiert, und einem zweiten gegenüberliegenden Wirk- und/oder Wickelförderer (22) mit gegenüber dem ersten (21) unterschiedlicher Geschwindigkeit (2a), der mit dem ersten (21) einen Wirk- und/oder Wickeldurchgang (23) begrenzt, um dazwischen ein Ausgangsteigstück (1) einzurollen und/oder in sich einzuschlagen, kombiniert mit einem oder mehreren im Abstand (19) voneinander angeordneten Hochstellmitteln (18,36,57), die jeweils zum Eingriff mit einer in Förderrichtung (2) vorne liegenden diskreten Randstelle (5) des Ausgangsteigstücks (1) angeordnet und ausgebildet sind und dem Wirk-oder Wickeldurchgang (23) vorgelagert sind, wobei in einem Eingangsbereich (27) des Wirk- und/oder Wickeldurchgangs (23) zu dessen Inneren hin sich der Abstand der Wirk- und/oder Wickelförderer zunehmend bis auf einen gleichmäßigen Wert vermindert, **dadurch gekennzeichnet, daß** zu dieser Verminderung der erste Wirk- und/oder Wickelförderer (21,22) im Eingangsbereich (27) des Wirk- und/oder Wickeldurchgangs (23) einen rampenartig ansteigenden Schrägabschnitt (28,56) aufweist.

3. Vorrichtung nach Anspruch 2, **dadurch gekennzeichnet, daß** das oder die Hochstellmittel (18,36,57) als Greif- und/oder Reibkörper zum form-beziehungsweise kraftschlüssigen Eingriff mit dem Teigstückrand (3,5) und/oder als rampenartig ansteigender oder abfallender Schrägabschnitt (28,56) des ersten und/oder zweiten Wickelförderers (21,22) im Eingangsbereich (27) des Wirk- oder Wickeldurchgangs (23) ausgeführt sind, wobei vorzugsweise der Schrägabschnitt (28,56) in seiner Winkellage verstellbar (224) gelagert und mit einem sensorisch und/oder von einem Zeitgeber gesteuerten Verstellantrieb gekoppelt ist.

4. Vorrichtung nach Anspruch 2 oder 3, **dadurch gekennzeichnet, daß** das oder die Hochstellmittel (18,36,57) jeweils ein Einschlagrad (18) aufweisen, das entgegen der Förderrichtung (2) - vorzugsweise mit einem höheren Geschwindigkeitsbetrag als der erste und/oder zweite Wirk- und/oder Wickelförderer (21,22) - angetrieben und über seinem Umfang (20) zum Eingriff mit der oder den Randstellen (5) des Ausgangsteigstücks (1) ausgeführt und angeordnet ist.

5. Vorrichtung nach Anspruch 2, 3 oder 4, **dadurch gekennzeichnet, daß** das oder die Hochstellmittel (18,36,57) von einer Hebeeinrichtung (13) erfaßt sind, die zum Ansprechen auf das Anheben beziehungsweise Hochstellen (6) der Randstellen (3,5) ausgebildet ist.

6. Vorrichtung nach Anspruch 5, **dadurch gekennzeichnet, daß** die Hebeeinrichtung (13) von einer Antriebseinheit (14) bewegbar ist, die von einer mit einer Teigstück-Sensorik (12a,12b) verbundenen Steuerung kontrolliert ist, die auf ein das Anheben beziehungsweise Hochstellen (6) der Randstellen (5) meldendes Sensorsignal anspricht.

7. Vorrichtung nach Anspruch 6, **dadurch gekennzeichnet, daß** die Steuerung ein erstes Zeitverzögerungsmodul derart aufweist, daß die Antriebseinheit (14) zum Heben (70) nach Ablauf einer sich an die Sensormeldung anschließenden Zeitspanne angesteuert wird, die dem Zeitraum von der sensorischen Erfassung des Ausgangsteigstücks (1) bis einschließlich des Hochstellens (6) von dessen Randstellen (5) entspricht, und die Steuerung ferner ein zweites Zeitverzögerungsmodul derart aufweist, daß die Antriebseinheit (14) zum Senken (70) nach Ablauf einer anschließenden, weiteren Zeitspanne angesteuert wird, die dem Zeitraum zum Verlassen der Hochstellzone (18) durch das Ausgangsteigstück (1) entspricht.

8. Vorrichtung nach einem der Ansprüche 2 bis 7, **dadurch gekennzeichnet, daß** der Abstand (19) zweier Hochstellmittel (18) voneinander der stirnseitigen Breite (3) des Ausgangsteigstücks (1) oder der Erstreckung einer Speisefüllung (4) auf dem Ausgangsteigstück quer zur Förderrichtung (2) entspricht.

9. Vorrichtung nach einem der vorangehenden Ansprüche, **gekennzeichnet durch** mit dem oder den Hochstellmitteln (18) kombinierte Führungsmittel, die als das Ausgangsteigstück (1) gegen eine Unterlage (9,21), vorzugsweise ein Förderband drückende Räder realisiert sind, die im Bereich der Hochstellmittel (18) mit quer zur Förderrichtung (2) verlaufender Drehachse (15) angeordnet sind.

10. Vorrichtung nach einem der vorangehenden Ansprüche, **dadurch gekennzeichnet, daß** der erste und/oder zweite Wirk- und/oder Wickelförderer (21,22) jeweils mit einer Mehrzahl quer zur Förderrichtung (2) beabstandeter (25) Riemen (24) ausgeführt ist, die endlos um wenigstens zwei Antriebs- und/oder Spannwalzen (211,212,213; 221,222,223) geführt sind.

11. Vorrichtung nach Anspruch 10, **gekennzeichnet durch** derart angeordnete Hochstell- und gegebenenfalls Führungsmittel (18), daß sie zwischen die Riemen (24) tauchend mit dem zu wickelnden beziehungsweise wirkenden Ausgangsteigstück (1) in Kontakt bringbar sind.

12. Vorrichtung nach einem der vorangehenden Ansprüche, **gekennzeichnet durch** eine den Schrägabschnitt (28,56) erfassende Verstelleinrichtung (49) für dessen Schrägwinkel gegenüber der Grundebene des Wirk- und/oder Wickeldurchgangs (23).

13. Vorrichtung nach einem der vorangehenden Ansprüche, wobei der erste und/oder zweite Wirk- und/oder Wickelförderer (21,22) mit endlos um Antriebs- und/oder Spanntrommeln (211,212,213; 221,222,223) geführte Förderbänder- und/oder Förderriemen (54,24) realisiert sind, **dadurch gekennzeichnet, daß** im Eingangsbereich (27) wenigstens zwei Antriebs-und/oder Spanntrommeln (212,213; 222,223) in Förderrichtung (2) hintereinander angeordnet sind, von denen die erste (212;222) in einer gegenüber der Förderebene vertikal versetzten Ebene liegt.

14. Vorrichtung nach Anspruch 13, **dadurch gekennzeichnet, daß** von den Antriebs- oder Spanntrommeln (212,213; 222,223) wenigstens eine, vorzugsweise die nachgeordnete, vertikal beziehungsweise höhenverstellbar gelagert und mit einem sensorisch und/oder von einem Zeitgeber gesteuerten Verstellantrieb zur Ausführung von Hebe- und Senkbewegungen (224) gekoppelt ist.

15. Vorrichtung nach einem der vorangehenden Ansprüche, wobei der erste Wirk- und/oder Wickelförderer (21) zu wickelnde Ausgangsteigstücke (1) mit einer mittig angeordneten Füllung (4) trägt, **dadurch gekennzeichnet, daß** eine oder beide der den Wirk- und/oder Wickeldurchgang (23) begrenzenden, gegenüberliegenden Förderer-Seiten mit in Förderrichtung (2) länglichen, mittig angeordneten Vertiefungen auf ihrer Oberfläche versehen sind, wobei der erste und/oder zweite Wirk- und/oder Wickelförderer (21,22) mit endlos um Antriebs- und/oder Spannwalzen (211,212,213; 221,222,223) geführte Förderbänder (54) und/oder Förderriemen (24) realisiert sind, und zumindest die im Eingangsbereich (27) des Wirk- und/oder Wickeldurchgangs (23) befindliche(n) Walze(n) (212,213; 222,223) mit einer mittigen Verjüngung (29,41) gestaltet ist(sind), die entsprechend dem mittleren Abschnitt des zu wickelnden Ausgangsteigstücks (1) verläuft.

16. Vorrichtung nach Anspruch 15, **dadurch gekennzeichnet, daß** die Vertiefung (60) rundlich und/oder muldenartig gestaltet und/oder eine in Förderrichtung (2) zunehmende Breite aufweist.

17. Vorrichtung nach Anspruch 15 oder 16, **dadurch gekennzeichnet, daß** der Abstand (19) der Hochstellmittel (18) voneinander der Breite der Vertiefung(en) im Eingangsbereich (27) des Wirk- und/oder Wickeldurchgangs (23) und/oder der Breite einer Teigfüllung (4) und/oder der Breite (B) eines Ausgangsteigstücks (1) entspricht.

18. Vorrichtung nach einem der vorangehenden Ansprüche, **gekennzeichnet durch** Einstellmittel (35) für den Abstand (19) der Hochstellmittel (18) voneinander.

19. Vorrichtung nach einem der vorangehenden Ansprüche, **dadurch gekennzeichnet, daß** der erste und zweite Wirk- und/oder Wickelförderer (21,22) relativ zueinander derart beweglich (31) gelagert sind, daß eine manuelle Anpassung und/oder selbsttätige Einstellung des Wirk- und/oder Wickeldurchgangs (23) an die Dicke oder den Durchmesser des zu wickelnden Ausgangsteigstücks (1) gegeben ist.

20. Vorrichtung nach Anspruch 19, **dadurch gekennzeichnet, daß** der erste und/oder zweite Wirk- und/oder Wickelförderer (21,22) an ihren in Förderrichtung hinteren Enden derart angelenkt (30) sind, daß diese im Eingangsbereich (27) des Wirk- und/oder Wickeldurchgangs (23) relativ zueinander verschwenkbar (31) sind.

21. Vorrichtung nach einem der vorangehenden Ansprüche, **dadurch gekennzeichnet, daß** der erste Wirk- und/oder Wickelförderer (21) mit einer höheren Geschwindigkeit als der zweite und/oder im zum zweiten (2a) entgegengesetzten Richtungssinn (2) angetrieben ist.

## Claims

1. Method for the production by machine of a rolled dough product from a starting dough piece (1) by rolling it in on itself and/or turning it over, wherein the starting dough piece (1) is raised at one or more discrete or sporadically spaced point(s) (5) of its edge in a first phase, a continuous edge portion (3), which extends from an individual edge point (5), is in each case entrained upon raising the individual edge point(s) (3) in a following phase, and, starting from the edge portion (3) which is already raised, the dough piece is rolled up and/or turned inwards in a further following phase, **characterised in that,** during raising of the individual edge points (5), the edge portion (3) comprising these or the entire starting dough piece (1) is moved out of a starting plane into an oblique position.

2. Apparatus for the production of rolled dough products for carrying out the method according to Claim 1, with a first working and/or rolling conveyor (21), which carries the starting dough piece (1) which is to be rolled and defines a dough piece conveying direction (2), and a second opposite working and/or rolling conveyor (22) whose speed (2a) differs from that of the first one (21) and which, with the first one (21), defines a working and/or rolling passage (23) in order to roll up and/or turn in a starting dough piece (1) in between, combined with one or more upfolding means (18, 36, 57) which are disposed at a spacing (19) from one another, are in each case disposed and formed for engagement with a discrete edge point (5), lying in front in the conveying direction (2), of the starting dough piece (1) and are situated before the working or rolling passage (23), wherein the spacing of the working and/or rolling conveyors becomes increasingly smaller to a constant value in an entry region (27) of the working and/or rolling passage (23) towards the interior of the latter, **characterised in that** the first working and/or rolling conveyor (21, 22) comprises an oblique portion (28, 56), which rises like a ramp, in the entry region (27) of the working and/or rolling passage (23) for this decrease.

3. Apparatus according to Claim 2, **characterised in that** the upfolding means (18, 36, 57) is/are constructed as gripping and/or friction bodies for positive or non-positive engagement with the edge (3, 5) of the dough piece and/or oblique portion (28, 56), rising or descending like a ramp, of the first and/or second rolling conveyor(s) (21, 22) in the entry region (27) of the working and/or rolling passage (23), wherein the oblique portion (28, 56) is preferably mounted so as to be adjustable (224) in its angular position and is coupled to an adjusting drive controlled in sensory fashion and/or by a timer.

4. Apparatus according to Claim 2 or 3, **characterised in that** the upfolding means (18, 36, 57) in each case comprise(s) a fold-in wheel (18) which is driven against the conveying direction (2) - preferably with a higher speed value than the first and/or second working and/or rolling conveyor(s) (21, 22) - and is constructed and disposed over its circumference (20) for engagement with the edge point(s) (5) of the starting dough piece (1).

5. Apparatus according to Claim 2, 3 or 4, **characterised in that** the upfolding means (18, 36, 57) are taken up by a lifting device (13) which is formed to respond to the raising or upfolding (6) of the edge points (3, 5).

6. Apparatus according to Claim 5, **characterised in that** the lifting device (13) can be moved by a drive unit (14) which is controlled by a control system which is connected to the dough piece sensor system (12a, 12b) and which responds to a sensor signal which indicates the raising or upfolding (6) of the edge points (5).

7. Apparatus according to Claim 6, **characterised in that** the control system comprises a first time-delay module such that the drive unit (14) is activated for lifting (70) at the end of a time interval following the sensor signal and corresponding to the period from the sensory detection of the starting dough piece (1) to the upfolding (6) of the edge points (5) thereof, and the control system also comprises a second time-delay module such that the drive unit (14) is activated for lowering (70) at the end of a following, further time interval corresponding to the period in which the starting dough piece (1) leaves the upfolding zone.

8. Apparatus according to any one of Claims 2 to 7, **characterised in that** the spacing (19) between two upfolding means (18) corresponds to the end width (3) of the starting dough piece (1) or the extent of a food filling (4) on the starting dough piece transversely to the conveying direction (2).

9. Apparatus according to any one of the preceding Claims, **characterised by** guide means which are combined with the upfolding means (18) and which are formed as wheels which press the starting dough piece (1) against a support (9, 21), preferably a conveyor band, and are disposed in the region of the upfolding means (18) with a rotational shaft (15) extending transversely to the conveying direction (2).

10. Apparatus according to any one of the preceding Claims, **characterised in that** the first and/or second working and/or rolling conveyor(s) (21, 22) is/are in each case constructed with a plurality of belts (24) which are spaced apart transversely to the conveying direction (2) and which are guided continuously around at least two drive and/or tension rollers (211, 212, 213; 221, 222, 223).

11. Apparatus according to Claim 10, **characterised by** upfolding and, optionally, guide means (18) which are disposed such that, dipping between the belts (24), they can be brought into contact with the starting dough piece (1) to be rolled or worked.

12. Apparatus according to any one of the preceding Claims, **characterised by** an adjusting device (49) which takes up the oblique portion (28, 56) for the oblique angle thereof with respect to the reference plane of the working and/or rolling passage (23).

13. Apparatus according to any one of the preceding Claims, wherein the first and/or second working and/or rolling conveyor(s) (21, 22) is/are formed with conveyor bands and/or conveyor belts (54, 24) which are guided continuously around drive and/or tension drums (211, 212, 213; 221, 222, 223), **characterised in that** at least two drive and/or tension drums (212, 213; 222, 223) are disposed one behind the other in the conveying direction (2) in the entry region (27), the first (212; 222) of which lies in a plane which is vertically staggered with respect to the conveying plane.

14. Apparatus according to Claim 13, **characterised in that** at least one of the drive or tension drums (212, 213; 222, 223), preferably the succeeding one, is mounted so as to be adjustable vertically or in height and is coupled to an adjusting drive controlled in sensory fashion and/or by a timer for executing lifting and lowering movements (224).

15. Apparatus according to any one of the preceding Claims, wherein the first working and/or rolling conveyor (21) carries starting dough pieces (1), with a centrally disposed filling (4), which are to be rolled, **characterised in that** one or both opposite conveyor side(s) defining the working and/or rolling passage (23) is/are provided at the surface with centrally disposed hollows which are elongate in the conveying direction (2), wherein the first and/or second working and/or rolling conveyor(s) (21, 22) is/are formed with conveyor bands (54) and/or conveyor belts (24) which are guided continuously around drive and/or tension rollers (211, 212, 213; 221, 222, 223), and at least the roller(s) located in the entry region (27) of the working and/or rolling passage (23) is/are configured with a central taper (29, 41) which extends so as to correspond to the central portion of the starting dough piece (1) which is to be rolled.

16. Apparatus according to Claim 15, **characterised in that** the hollow (60) is roundish and/or trough-like and/or is of a width which increases in the conveying direction (2).

17. Apparatus according to Claim 15 or 16, **characterised in that** the spacing (19) between the upfolding means (18) corresponds to the width of the hollow(s) in the entry region (27) of the working and/or rolling passage (23) and/or the width of a dough filling (4) and or the width (B) of a starting dough piece (1).

18. Apparatus according to any one of the preceding Claims, **characterised by** setting means (35) for the spacing (19) between the upfolding means (18).

19. Apparatus according to any one of the preceding Claims, **characterised in that** the first and second working and/or rolling conveyors (21, 22) are mounted so that they can move (31) relative to one another such that the working and/or rolling passage (23) can be manually adapted and/or automatically set to the thickness or the diameter of the starting dough piece (1) which is to be rolled.

20. Apparatus according to Claim 19, **characterised in, that** the first and/or second working and/or rolling conveyor(s) (21, 22) is/are articulated (30) at its/their end(s) at the rear in the conveying direction such that these can be pivoted (31) relative to one another in the entry region (27) of the working and/or rolling passage (23).

21. Apparatus according to any one of the preceding Claims, **characterised in that** the first working and/or rolling conveyor (21) is driven at a higher speed than the second one and/or in a direction (2) opposite to that of the second one (2a).

## Revendications

1. Procédé pour confectionner mécaniquement un produit en pâte roulé à partir d'une pièce de pâte brute (1) en roulant et/ou rabattant cette dernière sur elle-même, selon lequel, dans une première phase, la pièce de pâte brute (1) est relevée en une ou plusieurs zones (5), discrètes ou individualisées à distance l'une de l'autre, de son bord, dans une phase qui suit, un tronçon de bord continu respectif (3), partant d'une zone de bord individuelle (5), est, lors du relevage de la ou des zone(s) de bord individuelle(s) (5), entraîné avec elle(s) et, dans une phase qui suit encore, la pièce de pâte est enroulée sur elle-même et/ou abattue vers l'intérieur à partir du tronçon de bord (3) déjà relevé, **caractérisé en ce que** pendant le relevage des zones de bord individuelles (5), le tronçon de bord (3), qui comporte ces dernières, ou la pièce de pâte brute entière (1) est déplacé d'un plan de départ jusque dans une position inclinée.

2. Dispositif pour confectionner des produits en pâte roulés, destiné à la mise en oeuvre du procédé selon la revendication 1, comprenant un premier transporteur de pétrissage et/ou d'enroulement (21), qui porte la pièce de pâte brute (1) à enrouler et définit une direction de transport (2) pour la pièce de pâte, et un second transporteur de pétrissage et/ou d'enroulement (22) placé en vis-à-vis, qui, par rapport au premier (21), présente une vitesse différente (2a) et qui délimite, avec le premier (21), un couloir de pétrissage et/ou d'enroulement (23), pour faire s'enrouler et/ou se replier sur elle-même une pièce de pâte brute (1) entre les deux transporteurs, en combinaison avec un ou plusieurs moyens de redressement (18, 36, 57) disposés à une certaine distance (19) l'un de l'autre, lesquels moyens de redressement sont respectivement positionnés et conçus pour se mettre en prise avec une zone de bord discrète (5), située en avant suivant la direction de transport (2), de la pièce de pâte brute (1) et sont placés en amont du couloir de pétrissage ou d'enroulement (23), l'écartement des transporteurs de pétrissage et/ou d'enroulement diminuant alors progressivement dans une région d'entrée (27) du couloir de pétrissage et/ou d'enroulement (23) en direction de l'intérieur de celui-ci, jusqu'à atteindre une valeur uniforme, **caractérisé en ce qu'**en vue de cette diminution, le premier transporteur de pétrissage et/ou d'enroulement (21, 22) présente, dans la région d'entrée (27) du couloir de pétrissage et/ou d'enroulement (23), un tronçon incliné (28, 56) qui s'élève à la manière d'une rampe.

3. Dispositif selon la revendication 2, **caractérisé en ce que** le ou les moyens de redressement (18, 36, 57) sont réalisés sous forme de corps de préhension et/ou de corps de friction, destinés à se mettre en prise par accrochage, respectivement par contact adhérant, avec le bord (3, 5) de la pièce de pâte, et/ou sous forme d'un tronçon incliné (28, 56), montant ou descendant à la manière d'une rampe, du premier et/ou du second transporteur d'enroulement (21, 22) dans la région d'entrée (27) du couloir de pétrissage ou d'enroulement (23), le tronçon incliné (28, 56) étant, de préférence, monté ajustable (224) dans sa position angulaire et accouplé à un actionneur d'ajustement de position, commandé par des détecteurs et/ou par une minuterie.

4. Dispositif selon la revendication 2 ou 3, **caractérisé en ce que** le ou les moyens de redressement (18, 36, 57) comportent chacun une roue d'impact (18), qui est entraînée en sens opposé à la direction de transport (2), de préférence à une vitesse d'une valeur supérieure à celle du premier et/ou du second transporteur de pétrissage et/ou d'enroulement (21, 22), et qui est aménagée sur sa circonférence (20) et positionnée pour se mettre en prise avec la ou les zones de bord (5) de la pièce de pâte brute (1).

5. Dispositif selon la revendication 2, 3 ou 4, **caractérisé en ce que** le ou les moyens de redressement (18, 36, 57) sont saisis par une structure élévatrice (13), qui est conçue pour intervenir en réponse au relevage ou au redressement (6) des zones de bord (3, 5).

6. Dispositif selon la revendication 5, **caractérisé en ce que** la structure élévatrice (13) est déplaçable au moyen d'une unité d'actionnement (14) contrôlée par une commande qui est reliée à un système de détection de pièce de pâte à capteur (12a, 12b) et qui est sensible à un signal du capteur indiquant le relevage ou le redressement (6) des zones de bord (5).

7. Dispositif selon la revendication 6, **caractérisé en ce que** la commande comporte un premier module de temporisation intervenant de telle sorte que l'unité d'actionnement (14) soit excitée dans le sens du soulèvement (70) à l'expiration d'un intervalle de temps directement consécutif au signal indicateur du capteur, lequel intervalle de temps correspond à la période de temps allant de la détection, par le capteur, de la pièce de pâte brute (1) jusqu'au redressement complet (6) des zones de bord (5) de cette dernière, et la commande comporte, en outre, un second module de temporisation intervenant de telle sorte que l'unité d'actionnement (14) soit excitée dans le sens de l'abaissement (70) à l'expiration d'un autre intervalle de temps directement consécutif, qui correspond à la période de temps qu'il faut à la pièce de pâte brute (1) pour quitter la zone de redressement (18).

8. Dispositif selon l'une des revendications 2 à 7, **caractérisé en ce que** l'écartement mutuel (19) des deux moyens de redressement (18) correspond à la largeur frontale (3) de la pièce de pâte brute (1) ou à la dimension d'une garniture alimentaire (4) déposée sur la pièce de pâte brute, dans une direction transversale à la direction de transport (2).

9. Dispositif selon l'une des revendications précédentes, **caractérisé par** des moyens de guidage combinés au ou aux moyens de redressement (18), moyens de guidage qui sont réalisés sous forme de roues repoussant la pièce de pâte brute (1) contre un support (9, 21), de préférence une bande transporteuse, et qui sont disposées dans la région des moyens de redressement (18), avec leur axe de rotation (15) qui s'étend transversalement à la direction de transport (2).

10. Dispositif selon l'une des revendications précédentes, **caractérisé en ce que** le premier et/ou le second transporteur de pétrissage et/ou d'enroulement (21, 22) sont chacun réalisés à l'aide d'une multiplicité de courroies (24) qui sont écartées l'une de l'autre (en 25) dans une direction transversale à la direction de transport (2) et qui sont engagées, sans fin, autour d'au moins deux rouleaux d'entraînement et/ou de mise en tension (211, 212, 213; 221, 222, 223).

11. Dispositif selon la revendication 10, **caractérisé par** des moyens de redressement et le cas échéant de guidage (18) qui sont positionnés de façon à pouvoir être amenés en contact, en pénétrant entre les courroies (24), avec la pièce de pâte brute (1) à enrouler ou à pétrir.

12. Dispositif selon l'une des revendications précédentes, **caractérisé par** un mécanisme d'ajustement (49) attaquant le tronçon incliné (28, 56), pour agir sur son angle d'inclinaison par rapport au plan de base du couloir de pétrissage et/ou d'enroulement (23).

13. Dispositif selon l'une des revendications précédentes, dans lequel le premier et/ou le second transporteur de pétrissage et/ou d'enroulement (21, 22) sont réalisés à l'aide de bandes transporteuses et/ou de courroies transporteuses (54, 24) engagées, sans fin, autour de cylindres d'entraînement et/ou de mise en tension (211, 212, 213; 221, 222, 223), **caractérisé en ce que** dans la région d'entrée (27), sont disposés, l'un à la suite de l'autre dans la direction de transport (2), au moins deux cylindres d'entraînement et/ou de mise en tension (212, 213; 222, 223), dont le premier (212; 222) est situé dans un plan décalé verticalement par rapport au plan de transport.

14. Dispositif selon la revendication 13, **caractérisé en ce qu'**au moins l'un des cylindres d'entraînement ou de mise en tension (212, 213; 222, 223), de préférence celui qui est disposé en aval, est monté ajustable en direction verticale ou en hauteur et est accouplé à un actionneur d'ajustement de position, commandé par capteur et/ou par une minuterie, pour l'exécution de mouvements d'élévation et d'abaissement (224).

15. Dispositif selon l'une des revendications précédentes, dans lequel le premier transporteur de pétrissage et/ou d'enroulement (21) porte des pièces de pâte brute (1) à enrouler qui ont une garniture de remplissage (4) disposée au centre, **caractérisé en ce que** l'une des faces de transporteur, ou les deux, qui sont placées en vis-à-vis en délimitant le couloir de pétrissage et/ou d'enroulement (23), sont pourvues, à leur surface, de renfoncements allongés dans la direction de transport (2) et disposés en leur milieu, le premier et/ou le second transporteur de pétrissage et/ou d'enroulement (21, 22) étant alors réalisés à l'aide de bandes transporteuses (54) et/ou de courroies transporteuses (24), engagées, sans fin, autour de rouleaux d'entraînement et/ou de mise en tension (211, 212, 213; 221, 222, 223), et au moins le ou les rouleau(x) (212, 213; 222, 223), qui se trouve(nt) dans la région d'entrée (27) du couloir de pétrissage et/ou d'enroulement (23), est (sont) doté(s) d'un resserrement central (29, 41), qui est placé en correspondance avec la partie centrale de la pièce de pâte brute (1) à enrouler.

16. Dispositif selon la revendication 15, **caractérisé en ce que** le renfoncement (60) est doté d'une configuration arrondie et/ou en forme d'auget et/ou présente une largeur qui augmente dans la direction de transport (2).

17. Dispositif selon la revendication 15 ou 16, **caractérisé en ce que** l'écartement mutuel (19) des moyens de redressement (18) correspond à la largeur du ou des renfoncement(s), dans la région d'entrée (27) du couloir de pétrissage et/ou d'enroulement (23), et/ou à la largeur d'une garniture (4) pour pâte et/ou à la largeur (B) d'une pièce de pâte brute (1).

18. Dispositif selon l'une des revendications précédentes, **caractérisé par** des moyens de réglage (35) pour l'écartement mutuel (19) des moyens de redressement (18).

19. Dispositif selon l'une des revendications précédentes, **caractérisé en ce que** le premier et le second transporteur de pétrissage et/ou d'enroulement (21, 22) sont montés mobiles (31) l'un par rapport à l'autre, de telle manière qu'une adaptation manuelle et/ou un réglage automatique du couloir de pétrissage et/ou d'enroulement (23) en fonction de l'épaisseur ou du diamètre de la pièce de pâte brute (1) à enrouler soit offert.

20. Dispositif selon la revendication 19, **caractérisé en ce que** le premier et/ou le second transporteur de pétrissage et/ou d'enroulement (21, 22) sont articulés (30) à leurs extrémités arrière, suivant la direction de transport, d'une manière telle qu'ils puissent être déplacés par pivotement (31) l'un par rapport à l'autre dans la région d'entrée (27) du couloir de pétrissage et/ou d'enroulement (23).

21. Dispositif selon l'une des revendications précédentes, **caractérisé en ce que** le premier transporteur de pétrissage et/ou d'enroulement (21) est entraîné à une vitesse plus élevée que celle du second et/ou dans une direction (2) de sens opposé à celle (2a) du second.
